# EUROPEAN PATENT APPLICATION

(11) **EP 4 564 776 A1**
(43) Date of publication of application: **04.06.2025**
(21) Application number: 23856156.7
(22) Date of filing: 26.05.2023
(51) Int. Cl.: H04L 47/2416, H04L 69/06

(54) **QUIC PACKET TRANSMISSION METHOD AND RELATED DEVICE**

(30) Priority: 25.08.2022 CN 202211028659; 10.10.2022 CN 202211234574
(71) Applicant: Huawei Technologies Co., Ltd., Shenzhen, Guangdong 518129 (CN)
(72) Inventor: FAN, Dawei, Shenzhen, Guangdong 518129 (CN); LI, Zhenbin, Shenzhen, Guangdong 518129 (CN); CHEN, Shuanglong, Shenzhen, Guangdong 518129 (CN); YANG, Hongjie, Shenzhen, Guangdong 518129 (CN)
(74) Representative: Thun, Clemens
(86) International application number: PCT/CN2023/096437
(87) International publication number: WO 2024/041064

(57) **Abstract**

This application belongs to the field of network technologies, and provides a QUIC packet transmission method and a related device. In this application, a QUIC header is set in a next header of an IPv6 extension header, or a QUIC header is set inside an IPv6 extension header, so that the QUIC packet carries the QUIC header without carrying a UDP header. Therefore, an encapsulation format of the QUIC packet is simplified, and overheads of transmitting the QUIC packet are reduced.

## Description

This application claims priority to Chinese Patent Application No. 202211234574.6, filed on October 10, 2022 and entitled "QUIC PACKET TRANSMISSION METHOD AND RELATED DEVICE", which is incorporated herein by reference in its entirety.

This application claims priority to Chinese Patent Application No. 202211028659.9, filed on August 25, 2022 and entitled "IPV6-BASED QUIC PACKET ENCAPSULATION METHOD AND RELATED DEVICE", which is incorporated herein by reference in its entirety.

### TECHNICAL FIELD

This application relates to the field of network technologies, and in particular, to a QUIC packet transmission method and a related device.

### BACKGROUND

Quick user datagram protocol internet connection (quick user datagram protocol internet connection, QUIC) is a transport layer protocol. The QUIC has advantages such as supporting processing of a large number of connections, high security, and low latency, and can better meet various requirements faced by a transport layer and an application layer today.

Currently, a QUIC packet is transmitted based on a UDP. Specifically, in a process in which a network device transmits the QUIC packet in an internet protocol version 6 (internet protocol version 6, IPv6) network, the QUIC packet includes an IPv6 basic header, an IPv6 extension header, a UDP header, a QUIC header, and a payload. The QUIC header is located between the UDP header and the payload.

When the foregoing method is used, an encapsulation format of the QUIC packet is excessively redundant, causing high overheads of transmitting the QUIC packet.

### SUMMARY

This application provides a QUIC packet transmission method and a related device, to reduce overheads of transmitting a QUIC packet. Technical solutions are as follows.

According to a first aspect, a QUIC packet transmission method is provided. The method includes:
A first network device generates a QUIC packet, where the QUIC packet includes an IPv6 extension header and a QUIC header, and the QUIC header is a next header of the IPv6 extension header or the QUIC header is located inside the IPv6 extension header; and
the first network device sends the QUIC packet.

According to the method provided in the first aspect, the QUIC header is set in a next header of the IPv6 extension header, or the QUIC header is set inside the IPv6 extension header, so that the QUIC packet carries the QUIC header without carrying a UDP header. Therefore, an encapsulation format of the QUIC packet is simplified, and overheads of transmitting the QUIC packet are reduced.

In some implementations, the QUIC header is a next header of the IPv6 extension header, and a value of a next header (next header, NH) field in the IPv6 extension header indicates the QUIC header.

According to the foregoing implementation, in a process of parsing a packet, when reading a value indicating a QUIC from a next header field in an IPv6 extension header, a receive end may learn that a next packet header of the IPv6 extension header is a QUIC header, to read information in the QUIC header to process the packet. In this implementation, a packet processing procedure of the receive end complies with a packet processing procedure defined in an IPv6 standard. Therefore, compatibility is good, and the foregoing implementation can be implemented provided that a device supports the IPv6, and implementation complexity is low.

In some implementations, the IPv6 extension header includes a destination options header (destination options header, DOH), a segment routing header (segment routing header, SRH), or a hop-by-hop options header (hop-by-hop options header, HBH).

In some implementations, the IPv6 extension header includes an option field, the option field includes an option type field and an option data field, a value of the option type field indicates the QUIC header, and the option data field includes the QUIC header.

According to the foregoing implementation, the QUIC header is used as a new option in the IPv6 extension header. In a process of parsing a packet, when reading a value indicating a QUIC from an option type field in an IPv6 extension header, the receive end may learn that an option data field after the option type field has a QUIC header, so that the packet is processed based on information in the QUIC header. This manner is compatible with an existing processing procedure of the IPv6 extension header, and implementation complexity is low.

In some implementations, the IPv6 extension header includes a DOH, an SRH, or an HBH.

In some implementations, the IPv6 extension header includes a first segment identifier (segment ID, SID) and a second SID, the first SID identifies a start point device of a first QUIC connection, the second SID identifies an end point device of the first QUIC connection, and the first QUIC connection is used for transmitting the QUIC packet.

According to the foregoing implementation, a segment for QUIC-based transmission in a forwarding path is identified using the SID, to meet a requirement of QUIC-based packet transmission on any one or more segments.

In some implementations, a value of a function field in the first SID indicates to send the QUIC packet through the first QUIC connection, a value of an arguments field in the first SID indicates to add the QUIC header, a value of a function field in the second SID indicates to receive the QUIC packet through the first QUIC connection, and a value of an arguments field in the second SID indicates to remove the QUIC header.

In some implementations, a value of a function field in the first SID indicates to send the QUIC packet through the first QUIC connection and add the QUIC header, and a value of a function field in the second SID indicates to receive the QUIC packet through the first QUIC connection and remove the QUIC header.

In some implementations, the IPv6 extension header includes a DOH, an SRH, or an HBH, the IPv6 extension header includes an option field, the option field includes an option data field, and the option data field includes the QUIC header, the first SID, and the second SID; or
the IPv6 extension header includes an SRH, a SID list in the SRH includes the first SID and the second SID, and an option field in the SRH includes the QUIC header or a next header of the SRH is the QUIC header.

In some implementations, the IPv6 extension header includes a first SID, the first SID identifies an endpoint device of a first QUIC connection, the first network device is an endpoint device other than the endpoint device in the first QUIC connection, and the first QUIC connection is used for transmitting the QUIC packet.

In some implementations, the IPv6 extension header further includes a third SID and a fourth SID, the third SID identifies a start point device of a second QUIC connection, the fourth SID identifies an end point device of the second QUIC connection, and the second QUIC connection is a QUIC connection after the first QUIC connection in a forwarding path of the QUIC packet.

In some implementations, that the first network device generates a QUIC packet includes:
The first network device receives an IPv6 packet, where the IPv6 packet includes the IPv6 extension header; and
the first network device adds the QUIC header to the IPv6 packet to obtain the QUIC packet.

Correspondingly, that the first network device sends the QUIC packet includes:
The first network device sends the QUIC packet through the first QUIC connection.

In some implementations, that the first network device generates a QUIC packet includes:
The first network device receives a data packet from a user equipment; and
the first network device adds the IPv6 extension header and the QUIC header to the data packet to obtain the QUIC packet, where a payload field of the QUIC packet includes the data packet.

In some implementations, that the first network device generates a QUIC packet includes:
The first network device generates the QUIC packet based on service data generated by the first network device, where a payload field of the QUIC packet includes the service data.

In some implementations, the QUIC packet does not include a user datagram protocol (user datagram protocol, UDP) internet connection header.

According to a second aspect, a network device is provided. The network device has a function of implementing any one of the first aspect or the optional implementations of the first aspect. The network device includes at least one unit, and the at least one unit is configured to implement the method provided in any one of the first aspect or the optional implementations of the first aspect.

In some implementations, the unit in the network device is implemented through software, and the unit in the network device is a program module. In some other implementations, the unit in the network device is implemented through hardware or firmware. For specific details of the network device provided in the second aspect, refer to any one of the first aspect or the optional implementations of the first aspect. Details are not described herein again.

According to a third aspect, a network device is provided. The network device includes a processor and a network interface. The processor is configured to execute instructions, to enable the network device to perform the method provided in any one of the first aspect or the optional implementations of the first aspect. The network interface is configured to receive or send a QUIC packet. For specific details of the network device provided in the third aspect, refer to any one of the first aspect or the optional implementations of the first aspect. Details are not described herein again.

According to a fourth aspect, a computer-readable storage medium is provided. The storage medium stores at least one instruction. When the instruction is run on a computer, the computer is enabled to perform the method provided in any one of the first aspect or the optional implementations of the first aspect.

According to a fifth aspect, a computer program product is provided. The computer program product includes one or more computer program instructions. When the computer program instructions are loaded and run by a computer, the computer is enabled to perform the method provided in any one of the first aspect or the optional implementations of the first aspect.

According to a sixth aspect, a chip is provided. The chip includes a memory and a processor. The memory is configured to store computer instructions. The processor is configured to invoke the computer instructions from the memory and run the computer instructions, to perform the method according to any one of the first aspect or the possible implementations of the first aspect.

### BRIEF DESCRIPTION OF DRAWINGS

FIG. 1 is a diagram of an application scenario according to an embodiment of this application;
FIG. 2 is a diagram of an application scenario according to an embodiment of this application;
FIG. 3 is a diagram of an application scenario according to an embodiment of this application;
FIG. 4 is a diagram of an application scenario according to an embodiment of this application;
FIG. 5 is a diagram of an application scenario according to an embodiment of this application;
FIG. 6 is a diagram of an application scenario according to an embodiment of this application;
FIG. 7 is a flowchart of a QUIC packet transmission method according to an embodiment of this application;
FIG. 8 is a diagram of a packet format according to an embodiment of this application;
FIG. 9 is a diagram of a packet format according to an embodiment of this application;
FIG. 10 is a diagram of a packet format according to an embodiment of this application;
FIG. 11 is a diagram of a packet format according to an embodiment of this application;
FIG. 12 is a diagram of a packet format according to an embodiment of this application;
FIG. 13 is a diagram of a packet format according to an embodiment of this application;
FIG. 14 is a diagram of a packet format according to an embodiment of this application;
FIG. 15 is a diagram of a packet format according to an embodiment of this application;
FIG. 16 is a diagram of a packet format according to an embodiment of this application;
FIG. 17 is a diagram of a packet format according to an embodiment of this application;
FIG. 18 is a diagram of a packet format according to an embodiment of this application;
FIG. 19 is a diagram of a packet format according to an embodiment of this application;
FIG. 20 is a diagram of a packet format according to an embodiment of this application;
FIG. 21 is a diagram of a packet format according to an embodiment of this application;
FIG. 22 is a diagram of a packet format according to an embodiment of this application;
FIG. 23 is a diagram of a packet format according to an embodiment of this application;
FIG. 24 is a diagram of a packet format according to an embodiment of this application;
FIG. 25 is a diagram of a packet format according to an embodiment of this application;
FIG. 26 is a diagram of an application scenario according to an embodiment of this application;
FIG. 27 is a diagram of a packet format according to an embodiment of this application;
FIG. 28 is a diagram of an application scenario according to an embodiment of this application;
FIG. 29 is a diagram of a packet format according to an embodiment of this application;
FIG. 30 is a diagram of a packet format according to an embodiment of this application;
FIG. 31 is a diagram of an application scenario according to an embodiment of this application;
FIG. 32 is a diagram of an application scenario according to an embodiment of this application;
FIG. 33 is a diagram of an application scenario according to an embodiment of this application;
FIG. 34 is a diagram of an application scenario according to an embodiment of this application;
FIG. 35 is a diagram of an application scenario according to an embodiment of this application;
FIG. 36 is a diagram of a structure of a network device according to an embodiment of this application; and
FIG. 37 is a diagram of a structure of a network device according to an embodiment of this application.

### DESCRIPTION OF EMBODIMENTS

To make the objectives, technical solutions, and advantages of this application clearer, the following further describes implementations of this application in detail with reference to the accompanying drawings.

In a scenario in which a QUIC packet is transmitted in an internet protocol version 6 (internet protocol version 6, IPv6) network in conventional technologies, in a sequence from a packet header to a packet tail or from an outer layer to an inner layer, in the QUIC packet, an IPv6 header is first, a user datagram protocol (user datagram protocol, UDP) header is followed, a QUIC header is followed, and a payload (payload) is followed. In conclusion, in the conventional technologies, the QUIC header is set after the UDP header.

However, the inventor of this application finds that, in an IPv6 network transmission scenario, encapsulation of the QUIC packet is excessively redundant due to the existence of the UDP header, causing high overheads of transmitting the QUIC packet.

Specifically, in the IPv6 network transmission scenario, a packet carries an IPv6 header. The IPv6 header includes at least an IPv6 basic header, and optionally, the IPv6 header further includes one or more IPv6 extension headers. The IPv6 header shoulders some functions originally shouldered by the UDP header. For example, a port number in the UDP header is used for shouldering functions of load balancing and identifying an upper-layer application. However, a flow label (flow label) in the IPv6 basic header can also implement the load balancing, and next header (next header, NH) fields in the IPv6 extension header and the IPv6 basic header can also implement the function of identifying the upper-layer application. Therefore, the IPv6 header can replace the UDP header to some extent, and the UDP header is of little value and causes packet encapsulation redundancy.

In view of this, in some embodiments of this application, a simplified packet encapsulation format is provided for a scenario in which a QUIC packet is transmitted in an IPv6 network. In the packet encapsulation format in embodiments of this application, a QUIC header is set between an IPv6 basic header and a payload. For example, the QUIC header is set at any position in an IPv6 extension header. For example, the QUIC header is set inside any existing IPv6 extension header; or the QUIC header is used as an independent IPv6 extension header and inserted into any position of an existing IPv6 extension header. According to this embodiment, the QUIC packet carries the QUIC header without carrying a UDP header, resolving a problem of QUIC packet encapsulation redundancy in the IPv6 network, and reducing overheads of transmitting the QUIC packet.

The following describes application scenarios of embodiments of this application by using examples.

Embodiments of this application are applied to a scenario in which two devices transmit the QUIC packet in the IPv6 network. For example, the two devices first establish a connection based on a QUIC protocol, and then implement the method provided in embodiments of this application through the connection, to transmit the QUIC packet.

A product form of endpoint device of the QUIC connection has a plurality of implementations. For example, the endpoint device of the QUIC connection is a network side device, such as a router, a switch, or a firewall; or the endpoint device of the QUIC connection is a user side device, such as a personal computer, a notebook computer, a mobile phone, or another terminal. For another example, the endpoint device of the QUIC connection is a service side device, such as a server or a storage device.

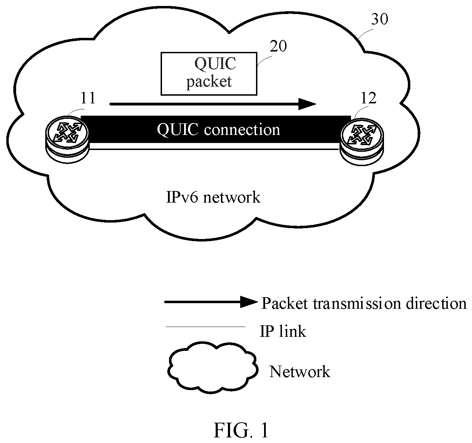

In the following embodiments of this application, a scenario in which two network devices transmit a QUIC packet is used as an example for description. For distinguishing descriptions, the two network devices are respectively referred to as a "first network device" and a "second network device". As shown in FIG. 1, a QUIC connection is established between a first network device 11 and a second network device 12, and the first network device 11 and the second network device 12 are two endpoint devices of the QUIC connection. Both the first network device 11 and the second network device 12 are located in an IPv6 network. The first network device 11 and the second network device 12 may also be replaced with devices of other types other than the network devices based on different usage scenarios, for example, replaced with a first user equipment and a second user equipment, or replaced with a first server and a second server.

In embodiments of this application, an example in which the first network device 11 sends the QUIC packet to the second network device 12 is used for description subsequently. The first network device 11 is a start point device of the QUIC connection. The first network device 11 is a transmit end of the QUIC packet. The second network device 12 is a receive end of the QUIC packet. The second network device 12 is an end point device of the QUIC connection. The first network device 11 is, for example, configured to: add a QUIC header, encrypt a payload, and send a packet through the QUIC connection. The second network device 12 is, for example, configured to: remove a QUIC header, decrypt a payload, and receive a packet through the QUIC connection.

This embodiment of this application is applicable to a scenario in which a QUIC client transmits a packet to a QUIC server. In this scenario, the first network device 11 is the QUIC client, and the second network device 12 is the QUIC server. This embodiment of this application is also applicable to a scenario in which a QUIC server transmits a packet to a QUIC client. In this scenario, the first network device 11 is the QUIC server, and the second network device 12 is the QUIC client.

The endpoint device of the QUIC connection is deployed in the IPv6 network. The following uses four possible deployment locations as an example for description.

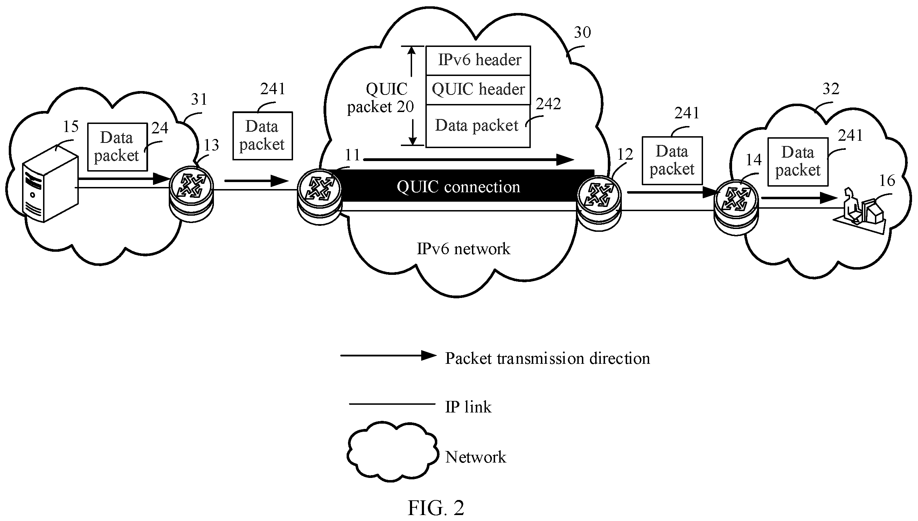

Deployment location 1: Two endpoint devices of the QUIC connection are both deployed at an edge of the IPv6 network. For example, refer to FIG. 2. In a scenario shown in FIG. 2, the first network device 11 is an ingress node of the IPv6 network. The second network device 12 is an egress node of the IPv6 network.

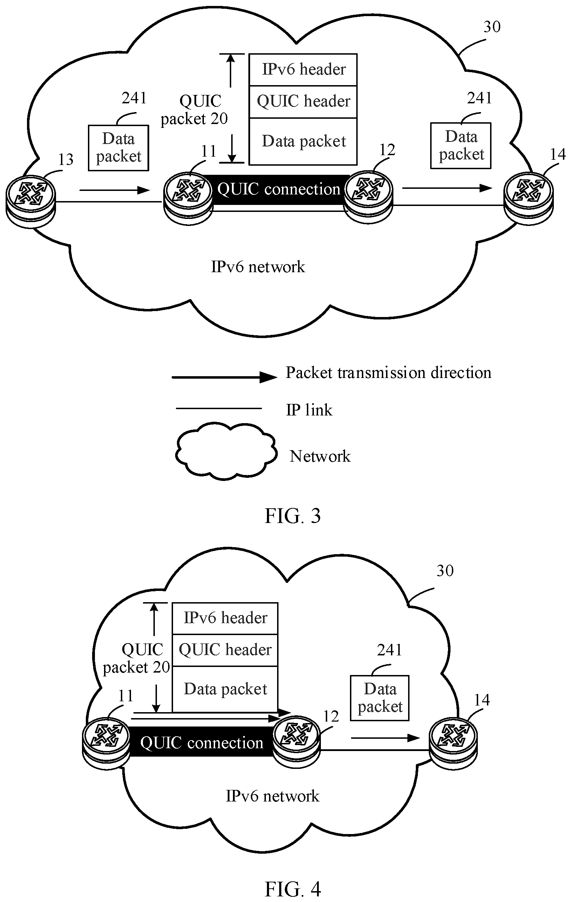

Deployment location 2: Two endpoint devices of the QUIC connection are both deployed inside the IPv6 network. For example, refer to FIG. 3. In a scenario shown in FIG. 3, a third network device 13 is an ingress node of the IPv6 network. A fourth network device 14 is an egress node of the IPv6 network. The first network device 11 and the second network device 12 are deployed in the IPv6 network, a link is established between the first network device 11 and the third network device 13 based on an IPv6 protocol, and a link is established between the second network device 12 and the fourth network device 14 based on the IPv6 protocol.

Deployment location 3: A start point device of the QUIC connection is deployed inside the IPv6 network, and an end point device of the QUIC connection is deployed at an edge of the IPv6 network. For example, refer to FIG. 4. In a scenario shown in FIG. 4, the first network device 11 is an ingress node of the IPv6 network. The second network device 12 is deployed inside the IPv6 network. A fourth network device 14 is an egress node of the IPv6 network. A link is established between the second network device 12 and the fourth network device 14 based on an IPv6 protocol.

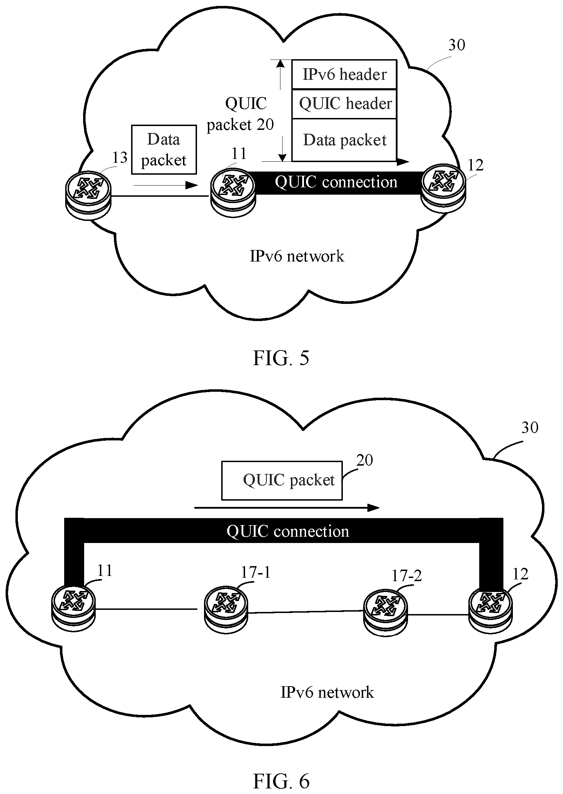

Deployment location 4: A start point device of the QUIC connection is deployed at an edge of the IPv6 network, and an end point device of the QUIC connection is deployed inside the IPv6 network. For example, refer to FIG. 5. In a scenario shown in FIG. 5, a third network device 13 is an ingress node of the IPv6 network. The first network device 11 is deployed inside the IPv6 network, and a link is established between the first network device 11 and a third network device 13 based on the IPv6 protocol. The second network device 12 is an egress node of the IPv6 network.

This embodiment of this application is applicable to a scenario in which the two endpoint devices of the QUIC connection are directly connected through one IPv6 link. In this scenario, a next-hop IPv6 node of the start point device of the QUIC connection is the end point device of the QUIC connection. This embodiment of this application is also applicable to a scenario in which there is one or more intermediate nodes between the two endpoint devices of the QUIC connection. The intermediate node is configured to forward, to the end point device of the QUIC connection, a QUIC packet sent by the start point device of the QUIC connection. For example, refer to FIG. 6. In a scenario shown in FIG. 6, there are two intermediate nodes between the first network device 11 and the second network device 12, an IPv6 link is established between the first network device 11 and an intermediate node 17-1, an IPv6 link is established between the intermediate node 17-1 and an intermediate node 17-2, and an IPv6 link is established between the intermediate node 17-2 and the second network device 12.

Embodiments of this application are applicable to a scenario in which service data of the device is transmitted based on the QUIC, and are also applicable to a scenario in which service data from another device is transmitted based on the QUIC. For example, user equipments are respectively deployed on two sides of the two endpoint devices of the QUIC connection, and the two endpoint devices of the QUIC connection transmit the service data of the user equipment based on the QUIC. For example, refer to FIG. 2. In a scenario shown in FIG. 2, the first network device 11 is connected to a first user equipment 15 via a network, and the second network device 12 is connected to a second user equipment 16 via a network. The first network device 11 is configured to: after receiving a data packet 241 from the first user equipment 15, encrypt the data packet 241 based on an encryption mechanism in the QUIC, use a data packet 242 in a ciphertext form as a payload, and add a QUIC header and an IPv6 header to obtain a QUIC packet 20. The second network device 12 is configured to: receive the QUIC packet 20 based on the QUIC connection, decapsulate the QUIC header and the IPv6 header, decrypt the data packet 242 in the ciphertext form to obtain the data packet 241 in a plaintext form, and forward the data packet 241 to the second user equipment 16.

In an example scenario, embodiments of this application are applied to deploying a virtual private network (Virtual Private Network, VPN) service. For example, the first user equipment 15 and the second user equipment 16 are located in a same VPN, the first user equipment 15 is a customer network edge device (Customer Edge, CE) of a first site in the VPN, and the second user equipment 16 is a CE of a second site in the VPN. Both the first network device 11 and the second network device 12 are provider edges (Provider Edges, PEs) of a service provider network, and an intermediate node between the first network device 11 and the second network device 12 is a backbone device (Provider, P) in the service provider network.

In another example application scenario, embodiments of this application are applied to traffic transmission in a data center. For example, both the first user equipment 15 and the second user equipment 16 are servers in the data center, and both the first network device 11 and the second network device 12 are switches in the data center. For example, the first network device 11 and the second network device 12 communicate based on a leaf-spine (leaf-spine) architecture, both the first network device 11 and the second network device 12 are leaf (leaf) switches, and an intermediate node between the first network device 11 and the second network device 12 is a spine (spine) switch. Alternatively, the first network device 11 and the second network device 12 communicate based on an access-aggregation-core three-layer architecture, both the first network device 11 and the second network device 12 are access switches, and an intermediate node between the first network device 11 and the second network device 12 includes an aggregation switch and a core switch.

The following uses an example to describe a method procedure in embodiments of this application with reference to the foregoing application scenario.

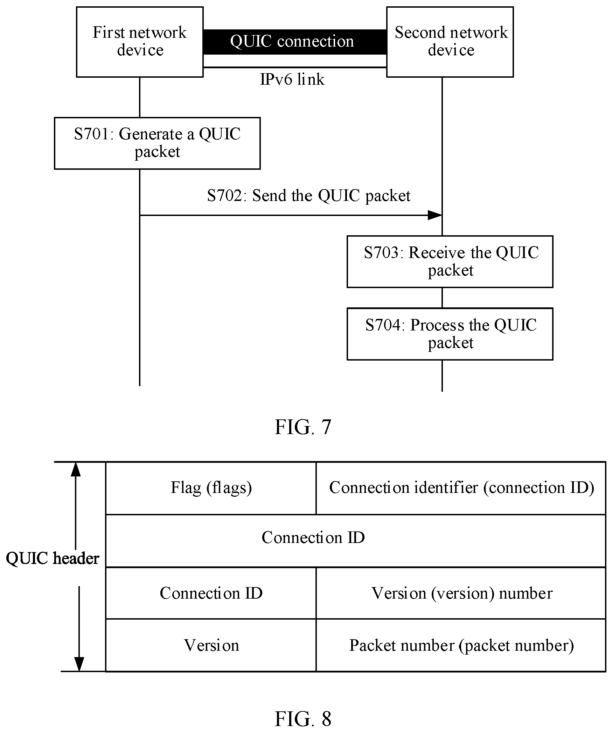

FIG. 7 is a flowchart of a QUIC packet transmission method according to an embodiment of this application. An application scenario on which the method shown in FIG. 7 is based includes but is not limited to the scenario shown in any one of FIG. 1 to FIG. 6. A first network device in the method shown in FIG. 7 is, for example, the first network device 11 in any one of FIG. 1 to FIG. 6, and a second network device in the method shown in FIG. 7 is, for example, the second network device 12 in any one of FIG. 1 to FIG. 6. The method shown in FIG. 7 includes the following step S701 to step S704.

Step S701: The first network device generates a QUIC packet.

The QUIC packet is an IPv6 packet. A packet header part of the QUIC packet includes an IPv6 basic header, one or more IPv6 extension headers, and a QUIC header. A payload field of the QUIC packet includes service data.

The QUIC header is used for carrying arguments related to QUIC-based transmission. FIG. 8 is a diagram of a format of a QUIC header. As shown in FIG. 8, the QUIC header includes one or more flag (flag) fields, a connection identifier (connection ID) field, a version (version) number field, and a packet number (packet number) field with a variable length. The flag field is used for identifying information such as a length of the connection ID field or a length of the packet number field. The connection identifier field is used for carrying an identifier of a QUIC connection. The identifier of the QUIC connection is, for example, a string of random numbers generated by the first network device. The version number field carries a version number of the QUIC protocol. For details about the QUIC header, refer to RFC9000.

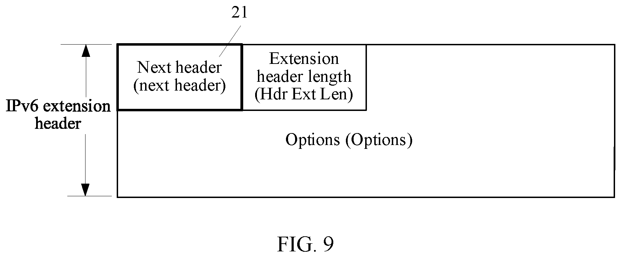

The IPv6 extension header is an IPv6 packet header located after the IPv6 basic header. FIG. 9 is a diagram of a format of an IPv6 extension header. As shown in FIG. 9, the IPv6 extension header includes a next header field 21, an extension header length (Hdr Ext Len) field, and one or more options (Options).

A carrying location of the QUIC header includes a plurality of cases. The following describes an example with reference to a carrying location 1 and a carrying location 2.

Carrying location 1: The QUIC header is a next header of the IPv6 extension header.

When the carrying location 1 is used, the QUIC header is used as an independent packet header. The QUIC header is in parallel with the existing IPv6 extension header. The QUIC header may be understood as a new type of IPv6 extension header.

A sequence relationship between the QUIC header and the IPv6 extension header includes a plurality of cases. In some embodiments, the QUIC header is a next header of the last IPv6 extension header. In other words, the QUIC header is located after all IPv6 extension headers and before the payload. In some other embodiments, the QUIC header is located between two IPv6 extension headers. In some other embodiments, the QUIC header is located before the first IPv6 extension header (for example, HBH). A sequence relationship between the QUIC header and another IPv6 extension header is not limited in this embodiment.

A plurality of implementations are provided in this embodiment to describe specific types of IPv6 extension header after which the QUIC header is located. The following uses four implementations as an example for description.

Implementation 1: The QUIC header is a next header of destination options headers (destination options headers, DOHs).

The DOHs are used for carrying data to be processed by a destination node. The DOHs include a DOH 1 and a DOH 2. The DOH 1 is a DOH located before a routing header (routing header, RH). The DOH 2 is a DOH located after the RH. The DOH 1 requires that each endpoint device on a path specified by the RH parses content of the DOH 1 and performs a corresponding function in a process of forwarding a packet on the path specified by the RH. The DOH 2 requires that each endpoint device on a path specified by the RH does not need to parse content of the DOH 2, while a destination endpoint device on the path specified by the RH parses the content of the DOH 2 and performs a corresponding function in a process of forwarding a packet on the path specified by the RH. If the packet does not include an RH, a device specified by a destination IP address in the IPv6 basic header parses the content of the DOH and performs the corresponding function. When the RH is a segment routing header (segment routing header, SRH), a path specified by the SRH passes through a device corresponding to each SID in a SID list, and the DOH 1 indicates the device corresponding to each SID in the SID list to parse the content of the DOH 1 and perform the corresponding function.

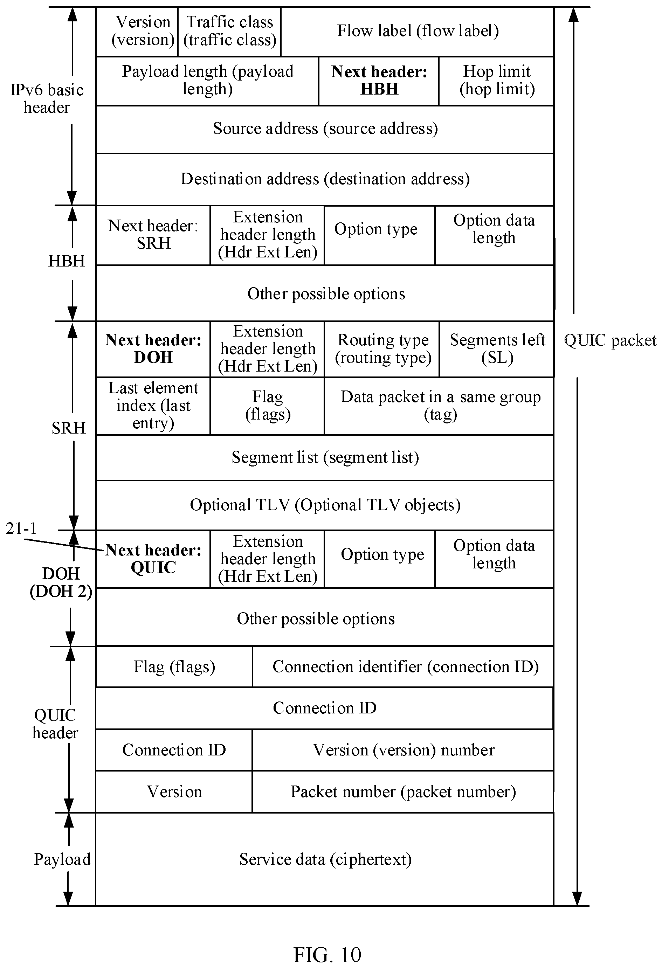

Optionally, the QUIC header is a next header of the DOH 2. For example, FIG. 10 is an example in which the QUIC header is a next header of the DOH 2. Alternatively, the QUIC header is a next header of the DOH 1.

Implementation 2: The QUIC header is a next header of a hop-by-hop options header (hop-by-hop options header, HBH).

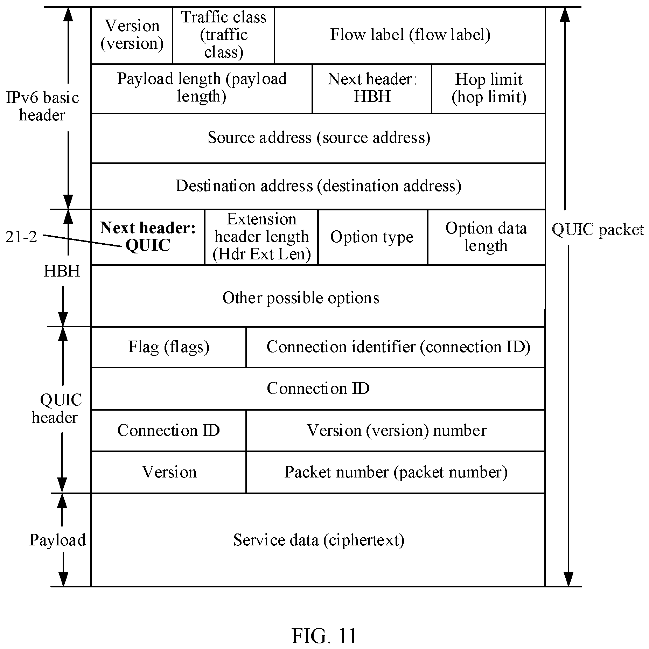

The HBH is used for transmitting data required by each hop of IPv6 node on a forwarding path. When a packet carries an HBH, in a packet forwarding process, each hop of IPv6 node on the path usually reads data in the HBH and processes the packet based on the data in the HBH. For example, FIG. 11 is an example in which the QUIC header is a next header of the HBH. Implementation 3: The QUIC header is a next header of an SRH.

The SRH is an RH in the IPv6. The SRH mainly includes a SID list (segment list), a routing type (routing type) field, and a segments left (segments left, SL) field. The SL and the segment list information together determine a destination address in the IPv6 basic header. Each time an SRv6 node is passed, the SL field decreases by 1 and the IPv6 destination address (Destination Address, DA) changes once. A value of the IPv6 DA is a SID to which a pointer points. The SL and the segment list field together determine the IPv6 DA. For example, if an SL value is n, the IPv6 DA value is a value of SID [0]. If the SL value is n-1, the IPv6 DA value is a value of SID [1]. If the SL value is 1, the IPv6 DA value is a value of SID [n-1]. If the SL value is 0, the IPv6 DA value is a value of SID [n].

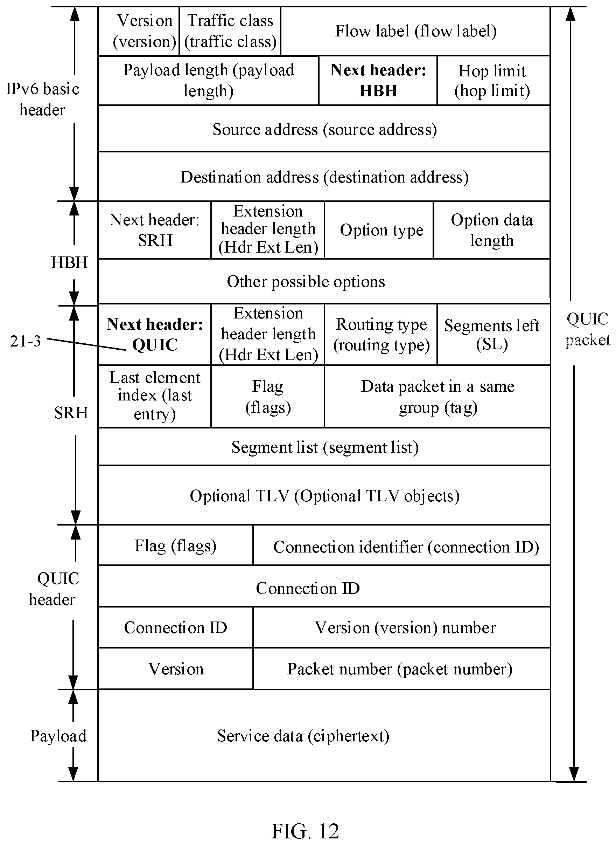

For example, FIG. 12 is an example in which a QUIC header is a next header of an SRH.

For how to indicate that there is a QUIC header in the IPv6 packet, in some embodiments, a value of a next header field in an IPv6 extension header that is located before the QUIC header and adjacent to the QUIC header indicates the QUIC header.

The next header field is a field that needs to be carried in the IPv6 basic header or the IPv6 extension header specified in the IPv6 protocol. The next header field indicates a protocol type of a next packet header. For example, if a value of the next header field is 0, it indicates that the next packet header is an HBH; if a value of the next header field is 17, it indicates that the next packet header is a UDP; if a value of the next header field is 60, it indicates that the next packet header is a DOH; if a value of the next header field is 43, it indicates that the next packet header is an RH (for example, an SRH); or if a value of the next header field is 59, it indicates that there is no next extension packet header.

In some implementations of this application, a new value of the next header field is defined, and a meaning of the value indicates the QUIC. When this implementation is used, the first network device inserts the QUIC header after an IPv6 extension header, and writes a value indicating the QUIC into a next header field of the IPv6 extension header, so that a value of the next header field in the IPv6 extension header indicates the QUIC header.

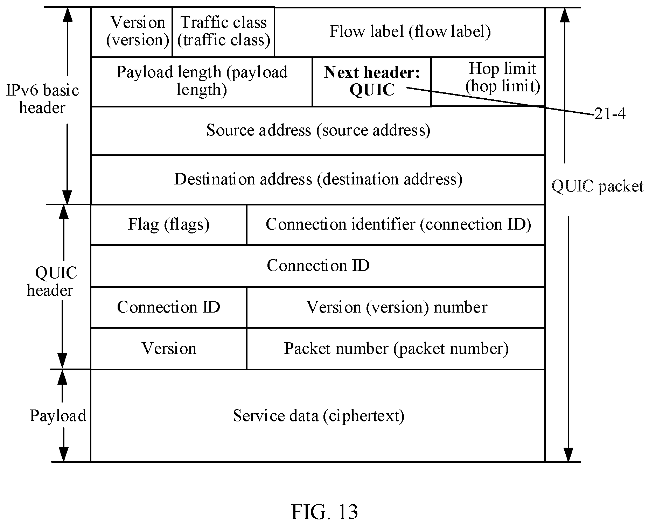

For example, FIG. 10 is an example in which a QUIC header is a next header of a DOH 2, and a value of a next header field 21-1 in the DOH 2 indicates the QUIC header. For another example, FIG. 11 is an example in which a QUIC header is a next header of an HBH, and a value of a next header field 21-2 in the HBH indicates the QUIC header. For another example, FIG. 12 is an example in which a QUIC header is a next header of an SRH, and a value of a next header field 21-3 in the SRH indicates the QUIC header. For another example, FIG. 13 is an example in which a QUIC header is a next header of an IPv6 basic header, and a value of a next header field 21-4 in the IPv6 basic header indicates the QUIC header.

According to the foregoing implementation, in a process of parsing a packet, when reading a value indicating a QUIC from a next header field in an IPv6 extension header, a receive end may learn that a next packet header of the IPv6 extension header is a QUIC header, to read information in the QUIC header to process the packet. In this implementation, a packet processing procedure of the receive end complies with a packet processing procedure defined in an IPv6 standard. Therefore, compatibility is good, and the foregoing implementation can be implemented provided that a device supports the IPv6, and implementation complexity is low.

Carrying location 2: The QUIC header is located inside the IPv6 extension header.

When the carrying location 2 is used, the QUIC header is a part included in the existing IPv6 extension header.

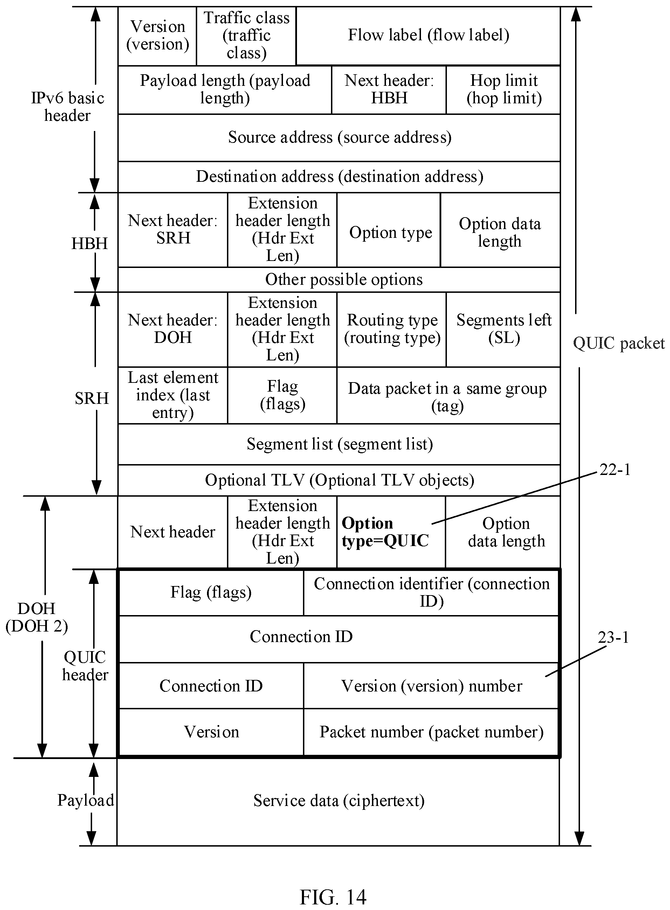

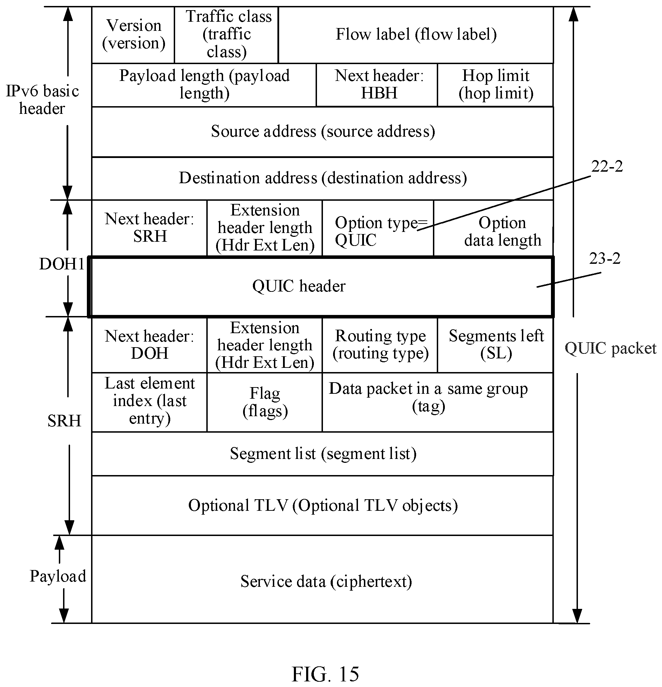

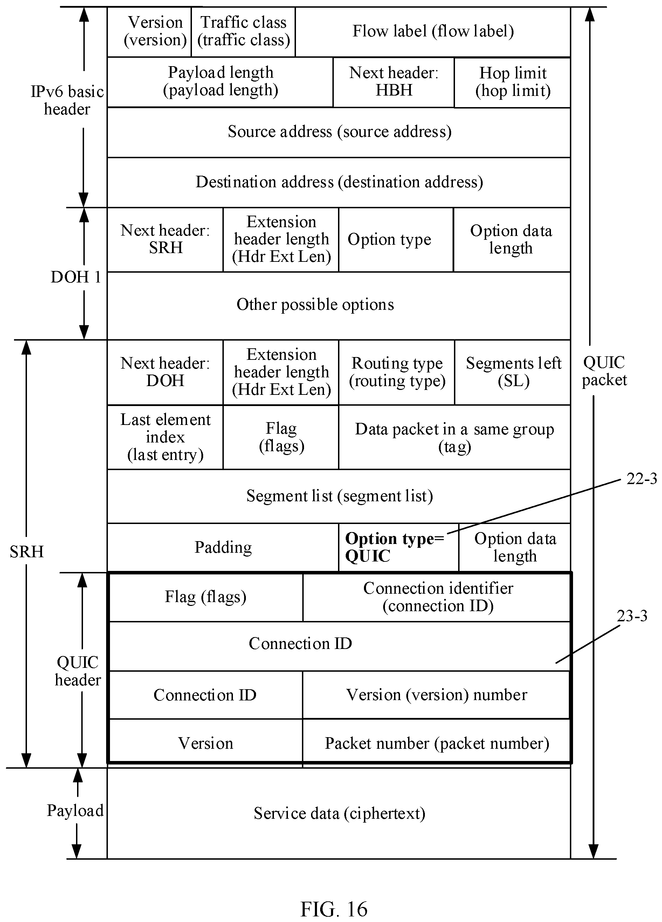

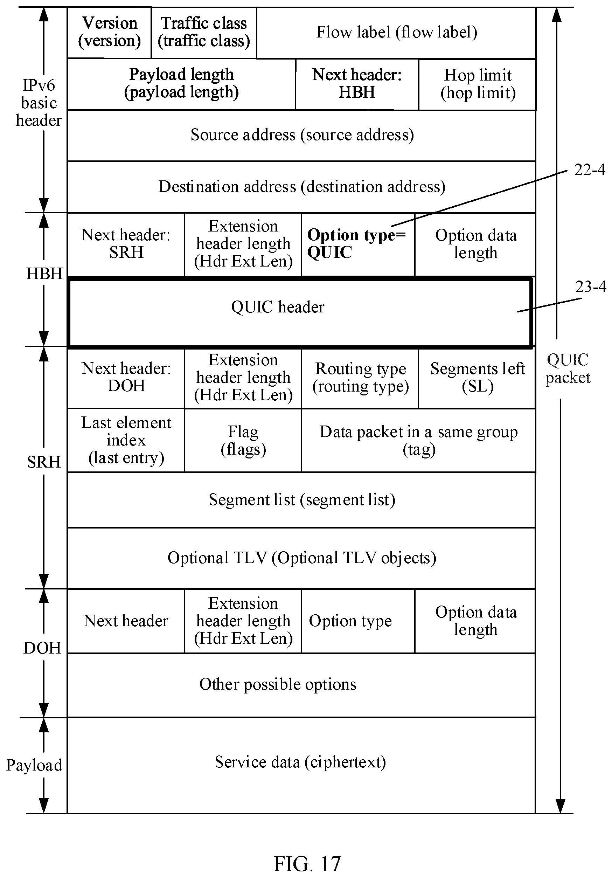

A plurality of implementations are provided in this embodiment for indicating a specific type of IPv6 extension header into which the QUIC header is encapsulated. In some embodiments, the QUIC header is located inside the DOH. For example, as shown in FIG. 14, the QUIC header is located inside a DOH 2. In some other embodiments, as shown in FIG. 15, the QUIC header is located inside a DOH 1. In some other embodiments, as shown in FIG. 16, the QUIC header is located inside an SRH. In some other embodiments, as shown in FIG. 17, the QUIC header is located inside an HBH.

The DOH 2 is a packet header to be processed by an egress node of a forwarding path, the QUIC header is encapsulated inside the DOH 2, when receiving the QUIC packet, the egress node of the forwarding path finds that the DOH 2 exists in the QUIC packet, and a current node is the egress node. Therefore, the current node parses content included in the DOH 2. When finding that there is a QUIC header in the DOH 2, the egress node may learn that QUIC-based transmission needs to be terminated, for example, the egress node may remove the QUIC header from the packet and decrypt a payload.

The HBH is a packet header to be processed by each hop of node on the forwarding path, and the QUIC header is encapsulated inside the HBH, so that each hop of node on the forwarding path can transmit, based on content of the QUIC header in the HBH, the packet by using the QUIC.

For a specific field in the IPv6 extension header in which the QUIC header is encapsulated, in some embodiments, the first network device uses the QUIC header as an option (option), and encapsulates the QUIC header into an option field of an existing IPv6 extension header.

When this manner is used, the QUIC header is in parallel with an existing IPv6 option, and the QUIC header is equivalent to a new type of IPv6 option, for example, referred to as a QUIC option.

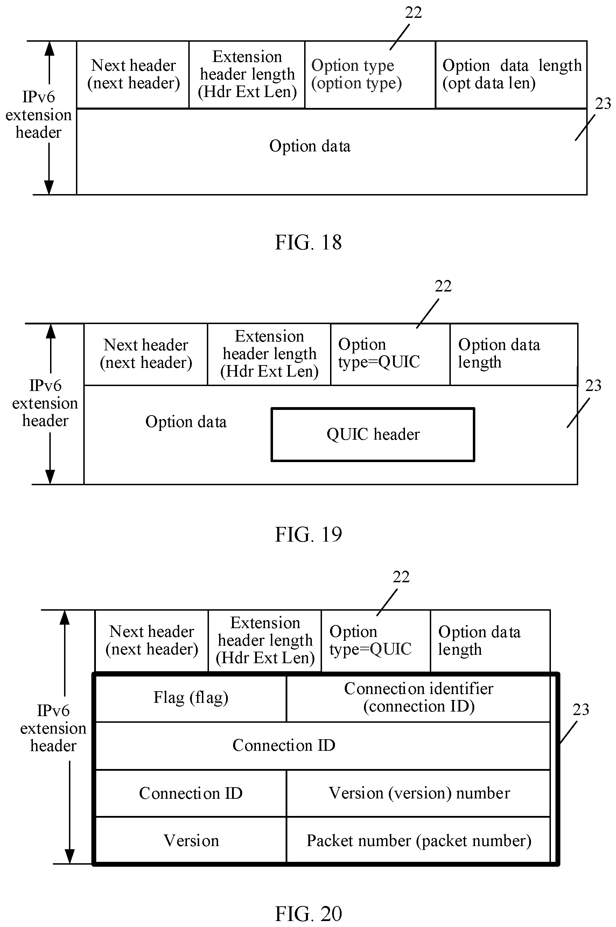

The option is also referred to as a type-length-value (type-length-value, TLV) option or an optional TLV (optional TLV). The option is an optional field in the IPv6 extension header. FIG. 18 is a diagram of a format of an option field in an IPv6 extension header. As shown in FIG. 18, the option field generally uses a TLV data structure, and the option field includes an option type (option type) field 22, an option data length (option data length, opt data len) field, and an option data field 23. The option type field 22 is a type part in the TLV data structure. The option type field 22 is, for example, an 8-bit field. The option type field 22 indicates a type of an option, for example, content of the option data field 23. The option data length field is a length part in the TLV data structure. The option data length field is, for example, an 8-bit field, and the option data length field indicates a length of an option. The option data field 23 is a value part in the TLV data structure, and the option data field 23 is used for carrying content of an option.

When the IPv6 extension header includes a plurality of option fields, there are a plurality of cases of option fields in which the QUIC header is located in the IPv6 extension header. For example, the QUIC header is located in a first option field in an IPv6 extension header. In some other embodiments, the QUIC header is located in the last option field in an IPv6 extension header. In some other embodiments, the QUIC header is located between two option fields in an IPv6 extension header. An option field in which the QUIC header is located in the IPv6 extension header is not limited in this embodiment.

For how to indicate that there is a QUIC header in the option field of the IPv6 extension header, in some embodiments, a value of the option type field is used to indicate the QUIC header. For example, refer to FIG. 19 or FIG. 20. The IPv6 extension header includes the option field. The option field includes the option type field 22 and the option data field 23. A value of the option type field 22 indicates the QUIC header, and the option data field 23 includes the QUIC header. According to the foregoing implementation, the QUIC header is used as a new option in the IPv6 extension header. In a process of parsing a packet, when reading a value indicating a QUIC from an option type field in an IPv6 extension header, the receive end may learn that an option data field after the option type field has a QUIC header, so that the packet is processed based on information in the QUIC header.

A plurality of implementations are provided in this embodiment for describing a specific option of the IPv6 extension header in which the QUIC header is encapsulated. In some embodiments, the first network device encapsulates the QUIC header into an option field of the DOH 2. FIG. 14 is a diagram of encapsulating a QUIC header into an option field of a DOH 2. As shown in FIG. 14, the option field in the DOH 2 includes an option type field 22-1 and an option data field 23-1. A value of the option type field 22-1 indicates the QUIC header, and the option data field 23-1 includes the QUIC header.

In some other embodiments, the first network device encapsulates the QUIC header into an option field of the DOH 1. FIG. 15 is a diagram of encapsulating a QUIC header into an option field of a DOH 1. As shown in FIG. 15, the option field in the DOH 1 includes an option type field 22-2 and an option data field 23-2. A value of the option type field 22-2 indicates the QUIC header, and the option data field 23-2 includes the QUIC header.

In some other embodiments, the first network device encapsulates the QUIC header into an option field of an SRH. FIG. 16 is a diagram of encapsulating a QUIC header into an option field of an SRH. As shown in FIG. 16, the option field in the SRH is, for example, located after a segment list (segment list). The option field in the SRH includes an option type field 22-3 and an option data field 23-3. A value of the option type field 22-3 indicates the QUIC header, and the option data field 23-3 includes the QUIC header.

In some other embodiments, the first network device encapsulates the QUIC header into an option field of an HBH. FIG. 17 is a diagram of encapsulating a QUIC header into an option field of an HBH. As shown in FIG. 17, the option field in the HBH includes an option type field 22-4 and an option data field 23-4. A value of the option type field 22-4 indicates the QUIC header, and the option data field 23-4 includes the QUIC header.

In some embodiments, the QUIC packet does not include a UDP header. In a encapsulation manner of removing the UDP packet header, packet encapsulation format redundancy caused by the UDP header is avoided.

There are a plurality of manners of obtaining content of each field in the QUIC packet. In some embodiments, in the foregoing listed fields in the QUIC packet, namely, the IPv6 basic header, the IPv6 extension header, the QUIC header, and the payload, content of the QUIC header is generated by the first network device, and content of the other parts other than the QUIC header is optionally generated by the first network device, or is generated by another device other than the first network device, and is sent to the first network device by the another device other than the first network device.

For the payload field in the QUIC packet, in some embodiments, content of the payload field is locally generated by the first network device. For example, an application running on the first network device generates service data, and the first network device generates the QUIC packet based on the service data. The payload field of the QUIC packet includes the service data. In some other embodiments, content of the payload field is from a user equipment. For example, the user equipment generates a data packet, and sends the data packet to the first network device. The first network device receives the data packet, uses the data packet as the payload, and adds the QUIC header to an outer layer of the data packet, to obtain the QUIC packet. The payload field of the QUIC packet includes the data packet.

For the IPv6 basic header and the IPv6 extension header in the QUIC packet, in some embodiments, content of the IPv6 basic header or the IPv6 extension header is locally generated by the first network device. A source IP address in the IPv6 basic header is an IPv6 address of the first network device. For example, the first network device is an ingress node of the IPv6 network. After receiving the data packet, the first network device adds the QUIC header to the outer layer of the data packet, adds the IPv6 basic header to an outer layer of the QUIC header, and optionally adds one or more IPv6 extension headers to obtain the QUIC packet.

In some other embodiments, content of the IPv6 basic header or the IPv6 extension header is generated by another network device located in an upstream of the first network device. For example, the ingress node of the IPv6 network sends an IPv6 packet. The IPv6 packet includes the IPv6 basic header and the IPv6 extension header, and the first network device adds the QUIC header to the received IPv6 packet, to obtain the QUIC packet. In still some embodiments, content of the IPv6 basic header or the IPv6 extension header is generated by the user equipment. For example, the user equipment and the first network device are deployed in a same IPv6 network, the user equipment communicates with the first network device based on an IPv6 protocol, and a data packet sent by the user equipment is an IPv6 packet. After receiving the data packet, the first network device adds the QUIC header to an outer layer of the data packet, to obtain the QUIC packet.

Refer to FIG. 7. Step S702: The first network device sends the QUIC packet.

The first network device sends the QUIC packet through the QUIC connection. In some embodiments, the first network device sends the QUIC packet in a transmission manner required in a QUIC protocol. For example, the first network device encrypts the payload by using a key, to obtain a payload in a ciphertext form. In the QUIC packet sent by the first network device, both the QUIC header and the IPv6 extension header are in a plaintext form, and the payload is in the ciphertext form. The key used by the first network device during encryption is, for example, determined by the first network device and the second network device through negotiation in a handshake phase. For another example, the first network device implements traffic control by using a sliding window mechanism. For another example, the first network device performs, according to the QUIC protocol, congestion control on a packet flow to which the QUIC packet belongs.

Step S703: The second network device receives the QUIC packet.

Step S704: The second network device processes the QUIC packet.

For example, the second network device removes the QUIC header from the QUIC packet, and decrypts the payload field to obtain the service data in the payload field.

According to the method provided in this embodiment, the QUIC header is set in a next header of the IPv6 extension header, or the QUIC header is set inside the IPv6 extension header, so that the QUIC packet carries the QUIC header without carrying a UDP header. Therefore, an encapsulation format of the QUIC packet is simplified, and overheads of transmitting the QUIC packet are reduced.

The embodiment shown in FIG. 7 focuses on a procedure of transmitting the packet based on the QUIC by two devices without encapsulating the UDP header. In a process of forwarding the packet along a path, the packet may pass through a plurality of hops of devices. Some devices may depend on the QUIC to transmit the packet, but some devices may not depend on the QUIC to transmit the packet.

In view of this, to more flexibly control specific devices on the forwarding path that transmit the packet based on the QUIC, a QUIC-related segment identifier (segment ID, SID) is provided in some embodiments of this application, and the SID is used to identify a segment for transmission based on the QUIC on the forwarding path, to meet a requirement of packet transmission based on the QUIC on any one or more segments. The following describes the QUIC-related SID by using an example.

For a meaning of the QUIC-related SID, in some embodiments, the QUIC-related SID indicates that a node corresponding to the SID transmits the packet based on the QUIC. For example, the QUIC-related SID includes a start point SID of the QUIC connection and an end point SID of the QUIC connection. The start point SID of the QUIC connection indicates to send the QUIC packet through the QUIC connection and add the QUIC header. The end point SID of the QUIC connection indicates to receive the QUIC packet through the QUIC connection and remove the QUIC header.

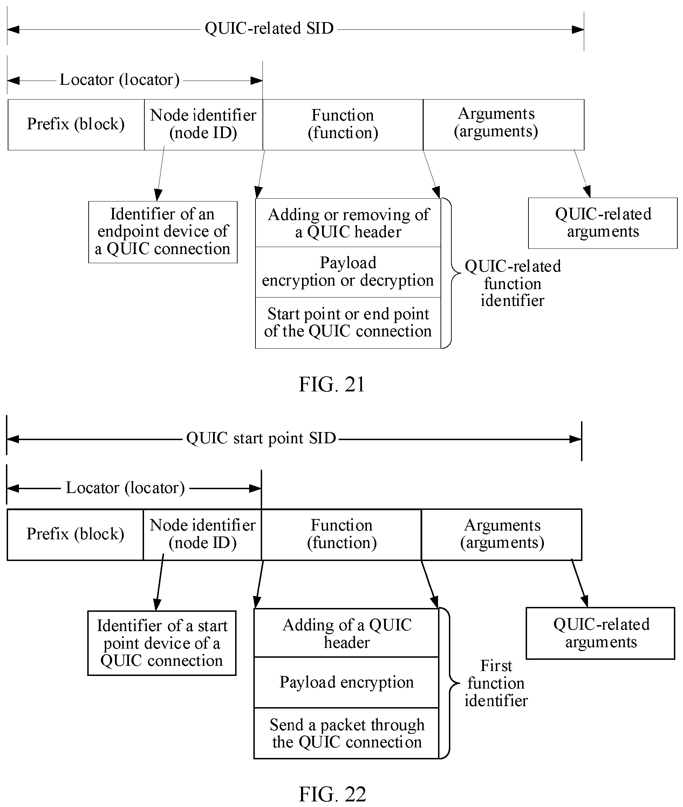

For a data structure of the QUIC-related SID, in some embodiments, as shown in FIG. 21, the QUIC-related SID includes a locator (locator) field, a function (function) field, and an arguments (arguments) field. The locator field occupies a high bit of the SID. The locator field is used for carrying location information of a device to guide the packet to be forwarded to the device. The locator field usually includes a block (block) field and a node ID (node identifier) field. The block field indicates an IP address block to which the SID belongs, and the IP address block is generally assigned by an operator to a subnet. The node ID field is used for carrying an identifier of the device, and is usually used for distinguishing between different devices in a subnet. The function field is used for carrying a function identifier of the device. A form of the function identifier is, for example, a character string. The function identifier has a binding relationship with instructions stored in the device, and therefore can indicate to the device to execute the instructions to implement a corresponding function. The function field is located after the locator field. The arguments field is an optional field in the SID. The arguments field is used for carrying function-related arguments.

For content of the locator field in the QUIC-related SID, in some embodiments, the locator field in the QUIC-related SID includes location information of an endpoint device of the QUIC connection. In a possible implementation, the node ID field in the locator field in the QUIC-related SID includes an identifier of the endpoint device of the QUIC connection. For example, a locator field in a start point SID of the QUIC connection includes location information of a start point device of the QUIC connection. For example, the node ID field in the locator field includes an identifier of the start point device of the QUIC connection. A locator field in an end point SID of the QUIC connection includes location information of an end point device of the QUIC connection. For example, the node ID field in the locator field includes an identifier of the end point device of the QUIC connection. The locator field in the QUIC-related SID carries the location information of the start point device of the QUIC connection, to indicate the packet to be forwarded to the start point device of the QUIC connection, and trigger the packet to be transmitted from the device based on the QUIC. The locator field in the QUIC-related SID carries the location information of the end point device of the QUIC connection, to indicate the packet to be forwarded to the end point device of the QUIC connection, and trigger to terminate QUIC-based packet transmission from the end point device.

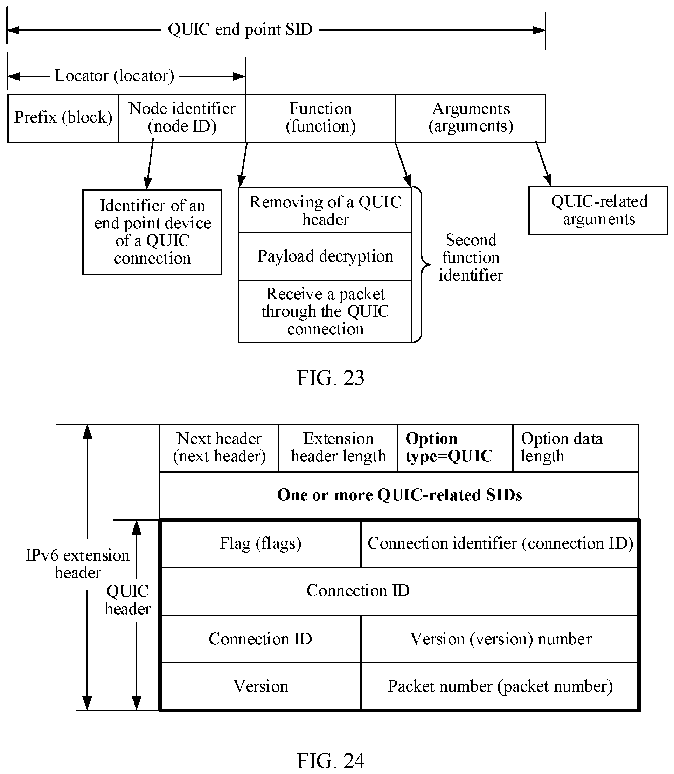

For content of the function field in the QUIC-related SID, in some embodiments, the function field in the QUIC-related SID includes a function identifier of the QUIC-based packet transmission, and the device stores instructions of the QUIC-based packet transmission, and a binding relationship between the instruction and the function identifier. Meanings of the function identifier of the QUIC-based packet transmission, include but are not limited to actions such as sending and receiving of the entire packet, adding and removing (or encapsulation and decapsulation) of the QUIC header, and encryption and decryption of the payload. In a possible implementation, as shown in FIG. 22, a function field in the start point SID of the QUIC connection includes a first function identifier, and the first function identifier indicates a function that needs to be performed by a transmit end of the QUIC connection, for example, at least one of sending a packet, adding a QUIC header, or encrypting a payload through the QUIC connection. As shown in FIG. 23, a function field in the end point SID of the QUIC connection includes a second function identifier, and the second function identifier indicates a function that needs to be performed by a receive end of the QUIC connection, for example, at least one of receiving a packet, removing a QUIC header, or decrypting a payload through the QUIC connection.

The foregoing three types of QUIC-related function identifiers for the sending and receiving of the entire packet, the encapsulation and decapsulation of the QUIC header, and the encryption and decryption of the payload are optionally carried at any location in the two fields: the function field and the arguments field. For example, a value of a function field in a start point SID of the QUIC connection indicates to send the QUIC packet through the QUIC connection and add the QUIC header, and a value of a function field in an end point SID of the QUIC connection indicates to receive the QUIC packet through the QUIC connection and remove the QUIC header. For another example, a value of a function field in a start point SID of the QUIC connection indicates to send the QUIC packet through the QUIC connection, add the QUIC header, and encrypt the payload, and a value of a function field in an end point SID of the QUIC connection indicates to receive the QUIC packet through the QUIC connection, remove the QUIC header, and decrypt the payload. For another example, a value of a function field in the start point SID of the QUIC connection indicates to send the QUIC packet through the QUIC connection. A value of a function field in an end point SID of the QUIC connection indicates to receive the QUIC packet through the QUIC connection. A value of an arguments field in a start point SID of the QUIC connection indicates to add the QUIC header. A value of an arguments field in an end point SID of the QUIC connection indicates to remove the QUIC header.

For a form of the QUIC-related SID, in some embodiments, the QUIC-related SID is implemented by using a SID in internet protocol version 6 for segment routing (internet protocol version 6 for segment routing, SRv6). For example, the QUIC-related SID is a 128-bit IPv6 address. In some other embodiments, the QUIC-related SID is implemented by using a SID in SR multi-protocol label switching (multi-protocol label switching, MPLS). For example, the QUIC-related SID is a 32-bit MPLS label. A form of the QUIC-related SID is not limited in this embodiment.

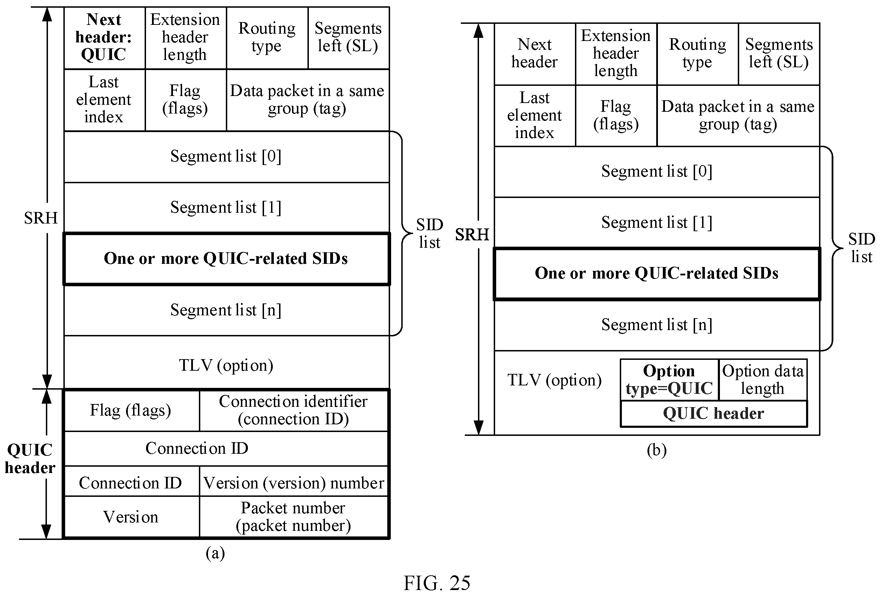

For a carrying location of the QUIC-related SID, in some embodiments, as shown in FIG. 24 or FIG. 25, the QUIC-related SID is carried in an IPv6 extension header. Optionally, as shown in FIG. 24, the QUIC-related SID is carried in an option field in the IPv6 extension header.

There are a plurality of implementations of a specific IPv6 extension header in which the QUIC-related SID is located. In some embodiments, the QUIC-related SID is carried in a DOH. For example, the QUIC-related SID is carried in a DOH 1 or a DOH 2. In some other embodiments, the QUIC-related SID is carried in an SRH. In some other embodiments, the QUIC-related SID is carried in an HBH.

A location relationship between the QUIC-related SID and the QUIC header includes a plurality of implementations. The following uses four location relationships as an example for description.

Location relationship A: The QUIC-related SID and the QUIC header are located in a same IPv6 extension header.

In some other implementations, the QUIC-related SID and the QUIC header are located in a same option of a same IPv6 extension header. For example, refer to FIG. 24. In the IPv6 extension header shown in FIG. 24, the option field includes an option type field, an option data length field, a QUIC header, and a QUIC-related SID, and the QUIC header is located after the QUIC-related SID. A format shown in FIG. 24 is applicable to any type of IPv6 extension header. For example, the IPv6 extension header shown in FIG. 24 is a DOH, the IPv6 extension header shown in FIG. 24 is an SRH, or the IPv6 extension header shown in FIG. 24 is an HBH.

In some other implementations, the QUIC-related SID and the QUIC header are located in different options of a same IPv6 extension header. For example, the IPv6 extension header includes a first option and a second option, the first option includes the QUIC-related SID, and the second option includes the QUIC header.

Location relationship B: The QUIC-related SID and the QUIC header are located in different IPv6 extension headers.

For example, the QUIC packet includes a first IPv6 extension header and a second IPv6 extension header, the first IPv6 extension header includes the QUIC-related SID, and the second IPv6 extension header includes the QUIC header. The first IPv6 extension header includes but is not limited to an SRH, a DOH, or an HBH. The second IPv6 extension header is optionally a DOH.

Location relationship C: The QUIC-related SID is located inside an IPv6 extension header, and the QUIC header is located in a next header of the IPv6 extension header.

Location relationship D: The QUIC-related SID is located in a destination address field of an IPv6 basic header, and the QUIC header is located inside an IPv6 extension header or a next header of the IPv6 extension header.

The following uses some specific IPv6 extension headers as an example to describe the foregoing location relationship between the QUIC header and the SID.

When the QUIC-related SID is carried in the DOH, in some embodiments, the DOH includes the option field, the option field includes the option data field, and the option data field includes the QUIC header and the foregoing QUIC-related SID. In some other embodiments, the option field of the DOH includes the QUIC-related SID, and a next header of the DOH is the QUIC header.

When the QUIC-related SID is carried in the SRH, in some embodiments, the SRH includes the option field, the option field includes the option data field, and the option data field includes the QUIC header and the QUIC-related SID. In some other embodiments, as shown in (a) in FIG. 25, a SID list (segment list) in the SRH includes the QUIC-related SID, and a next header of the SRH is the QUIC header. In some other embodiments, as shown in (b) in FIG. 25, a SID list in the SRH includes the QUIC-related SID and another type of SID, and an option in the SRH includes the QUIC header.

The QUIC-related SID is, for example, located at any location in the SID list. For example, when a head node on the SR path needs to be specified to perform QUIC-based transmission, the first SID in the SID list is a start SID of the QUIC connection. When an m^{th} intermediate node on the SR path needs to be specified to perform QUIC-based transmission, the m^{th} SID in the SID list is a start SID of the QUIC connection. When a tail node on the SR path is an end point of QUIC-based transmission, the last SID in the SID list is an end point SID of the QUIC connection.

When the QUIC-related SID is carried in the HBH, in some embodiments, the HBH includes the option field, the option field includes the option data field, and the option data field includes the QUIC header and the foregoing QUIC-related SID. In some other embodiments, the option field of the HBH includes the foregoing QUIC-related SID, and a next header of the HBH is the QUIC header.

In addition to the IPv6 extension header that may include the QUIC-related SID, in an SRv6 technology, each hop of SRv6 node copies a SID of a next hop of node to the destination address field in the IPv6 basic header, so that the destination address field in the IPv6 basic header may also include the QUIC-related SID.

For a process of using the start point SID of the QUIC connection, a processing procedure of the first network device 11 in the method embodiment shown in FIG. 7 is used as an example. For example, the first network device 11 stores a local SID table (local SID table). The local SID table of the first network device 11 includes the start point SID of the QUIC connection. In addition, the first network device 11 stores a correspondence between a first function identifier and a first instruction in the start point SID of the QUIC connection. The first instruction indicates to send the QUIC packet, add the QUIC header, and encrypt the payload through the QUIC connection. When the first network device 11 receives an IPv6 packet, the first network device 11 reads content of a destination address field in an IPv6 basic header in the IPv6 packet, and queries a local SID table of the first network device 11 based on the content of the destination address field. Alternatively, the first network device 11 reads a SID carried in an IPv6 extension header of the IPv6 packet, for example, a SID carried in an option of a DOH 1, an option of an HBH, or an option of an SRH, and then queries a local SID table of the first network device 11 based on the SID carried in the IPv6 extension header. If the start point SID of the QUIC connection in the local SID table is matched in a table lookup process, the first network device 11 queries a corresponding instruction based on the first function identifier in the start point SID, to obtain the first instruction. The first network device 11 executes the first instruction to implement S701 and S702. Optionally, the first network device 11 updates the destination address field in the IPv6 basic header of the QUIC packet by using the end point SID of the QUIC connection, or the first network device 11 adds the end point SID of the QUIC connection to the IPv6 extension header of the QUIC packet, so that the end point SID of the QUIC connection indicates to the second network device 12 to perform S703 and S704.

For a process of using the end point SID of the QUIC connection, a processing procedure of the second network device 12 in the method embodiment shown in FIG. 7 is used as an example. The second network device 12 stores a local SID table, and the local SID table of the second network device 12 includes the end point SID of the QUIC connection. In addition, the second network device 12 stores a correspondence between a second function identifier and a second instruction in the end point SID of the QUIC connection. The second instruction indicates to receive the QUIC packet, remove the QUIC header, and decrypt the payload through the QUIC connection. When the second network device 12 receives an IPv6 packet, the second network device 12 reads content of a destination address field in an IPv6 basic header in the IPv6 packet, and queries a local SID table of the second network device 12 based on the content of the destination address field. Alternatively, the second network device 12 reads a SID carried in an IPv6 extension header of the IPv6 packet, for example, a SID carried in an option of a DOH 1, an option of an HBH, or an option of an SRH, and then the second network device 12 queries a local SID table of the second network device 12 based on the SID carried in the IPv6 extension header. If the end point SID of the QUIC connection in the local SID table is matched in a table lookup process, the second network device 12 queries a corresponding instruction based on the second function identifier in the end point SID, to obtain the second instruction. The second network device 12 executes the second instruction to implement S703 and S704.

For a quantity of QUIC-related SIDs in the IPv6 extension header, in some embodiments, the quantity of QUIC-related SIDs in the IPv6 extension header is determined based on a quantity of segments for QUIC-based transmission on the forwarding path.

In a possible implementation, QUIC-related SIDs in the IPv6 extension header appear in pairs, each pair of QUIC-related SIDs correspond to one segment for QUIC-based transmission, and each pair of QUIC-related SIDs include a start SID and an end SID of one segment.

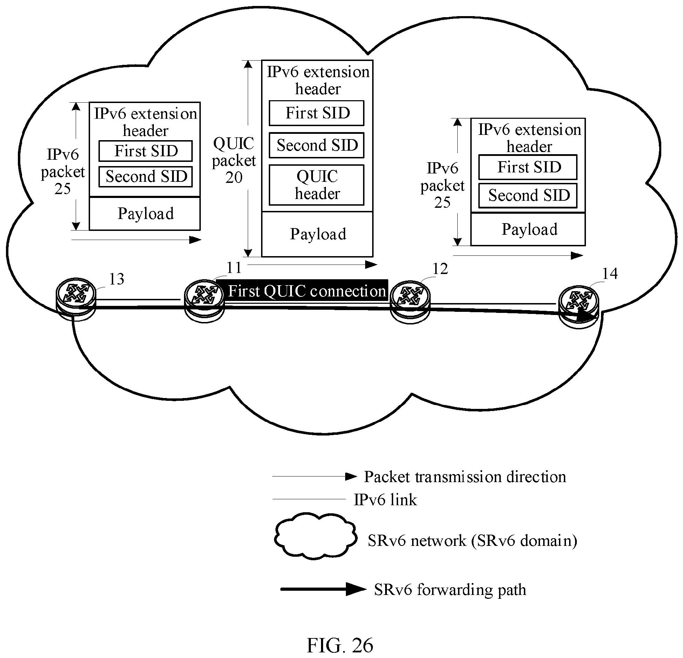

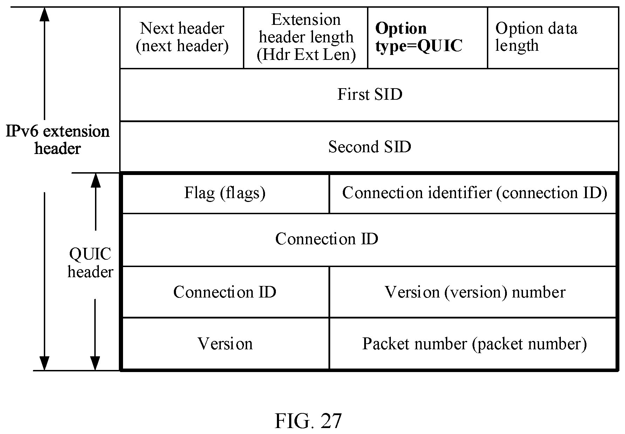

For example, as shown in FIG. 26, the SR forwarding path includes a segment for QUIC-based transmission, that is, a segment between the first network device 11 and the second network device 12. A first QUIC connection is established between the first network device 11 and the second network device 12. Correspondingly, the QUIC-related SID includes the first SID and the second SID. The first SID identifies a start point device of the first QUIC connection, that is, the first network device 11. The second SID identifies an end point device of the first QUIC connection, that is, the second network device 12. For example, an IPv6 extension header in an IPv6 packet 25 sent by a third network device 13 to the first network device 11 includes the first SID and the second SID. After receiving the IPv6 packet 25, the first network device 11 obtains the first SID from the IPv6 extension header, determines, based on the first SID, to send the IPv6 packet based on the first QUIC connection, and adds the QUIC header to the IPv6 extension header, to obtain a QUIC packet 20. A format of the IPv6 extension header in the QUIC packet 20 is shown in FIG. 27. After receiving the QUIC packet 20, the second network device 12 obtains the second SID from the IPv6 extension header, determines, based on the second SID, to receive the QUIC packet 20 based on the first QUIC connection, removes the QUIC header from the QUIC packet 20 to obtain the IPv6 packet 25, and sends the IPv6 packet 25 to a fourth network device 14. According to the foregoing implementation, a start point and an end point of QUIC-based transmission in a forwarding path are explicitly specified by using content of a packet header, and flexibility is high.

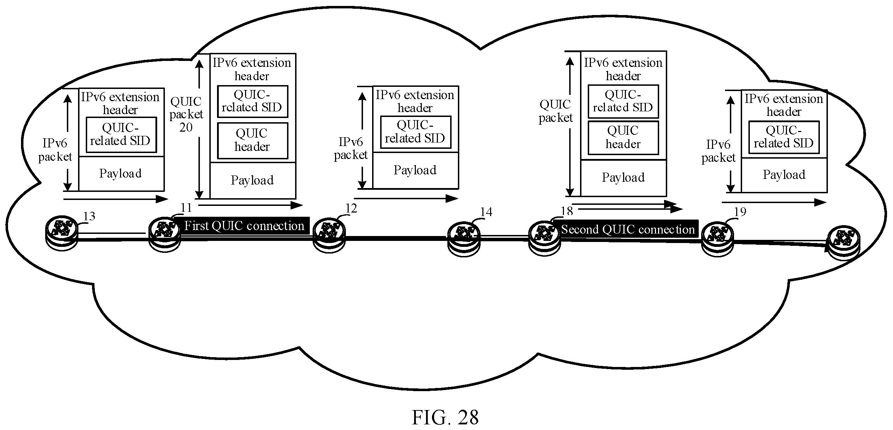

For another example, as shown in FIG. 28, the forwarding path of the SR includes two segments for QUIC-based transmission. Two endpoint devices of the first segment include the first network device 11 and the second network device 12. The first network device 11 and the second network device 12 transmit the QUIC packet through the first QUIC connection. Two endpoint devices of the second segment include a network device 18 and a network device 19. The network device 18 and the network device 19 transmit the QUIC packet through a second QUIC connection. Correspondingly, the QUIC-related SID includes a first SID, a second SID, a third SID, and a fourth SID. The first SID identifies a start point device of the first QUIC connection, for example, the first network device 11. The second SID identifies an end point device of the first QUIC connection, for example, the second network device 12. The third SID identifies a start point device of the second QUIC connection, for example, the network device 18. The fourth SID identifies an end point device of the second QUIC connection, for example, the network device 19. The second QUIC connection is a QUIC connection after the first QUIC connection in the forwarding path of the QUIC packet.

For another example, the forwarding path includes k segments for QUIC-based transmission, and the IPv6 extension header includes 2*k QUIC-related SIDs.

The first SID, the second SID, the third SID, or the fourth SID listed above has a feature of the QUIC-related SID. For a data structure and a carrying location of the first SID, the second SID, the third SID, or the fourth SID, and a location relationship between the first SID, the second SID, the third SID, or the fourth SID, and the QUIC header, refer to overall descriptions of the QUIC-related SID. For brevity of description, no enumeration is provided herein.

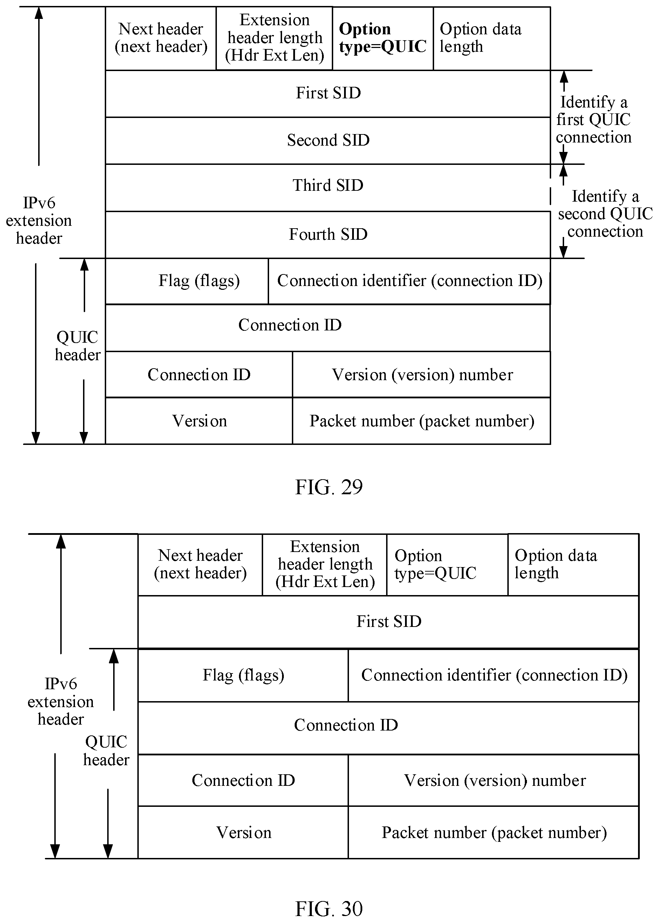

The foregoing described case in which the QUIC-related SIDs appear in pairs in the IPv6 extension header is used as an example. In some other embodiments, the IPv6 extension header includes an odd quantity of QUIC-related SIDs. For example, the IPv6 extension header includes only one QUIC-related SID. For example, as shown in FIG. 30, the IPv6 extension header includes a first SID, the first SID identifies an endpoint device of a QUIC connection, the first network device is an endpoint device other than the endpoint device in the first QUIC connection, and the first QUIC connection is used for transmitting the QUIC packet. The following uses two scenarios as an example to describe a scenario in which an odd quantity of SIDs are used.

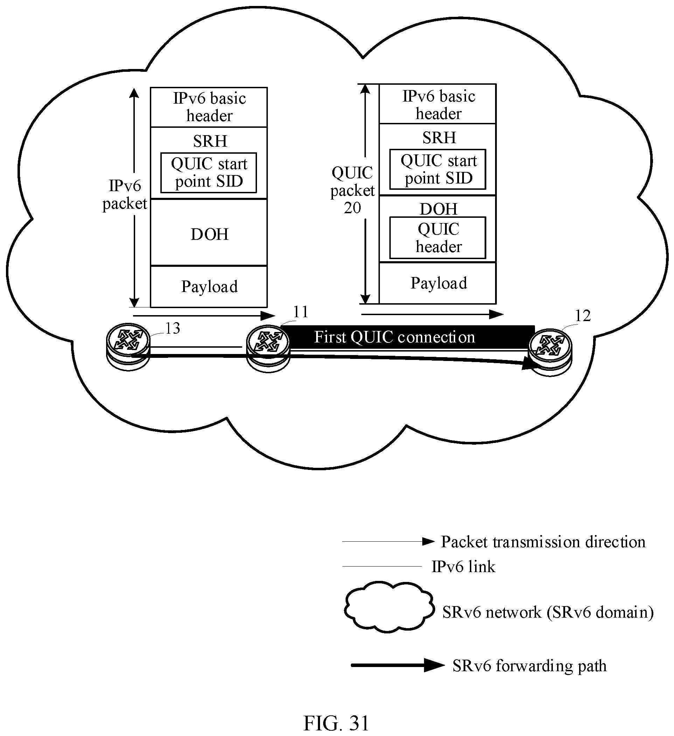

In an example application scenario, as shown in FIG. 31, a head node of an SR forwarding path and a start point of a QUIC connection are a same device, and are both a third network device 13 in FIG. 31. The head node of the SR forwarding path does not need to encapsulate a SID of the head node. Therefore, a start point SID of the QUIC connection on the head node is not encapsulated, and an end point SID of the QUIC connection on the head node is encapsulated.

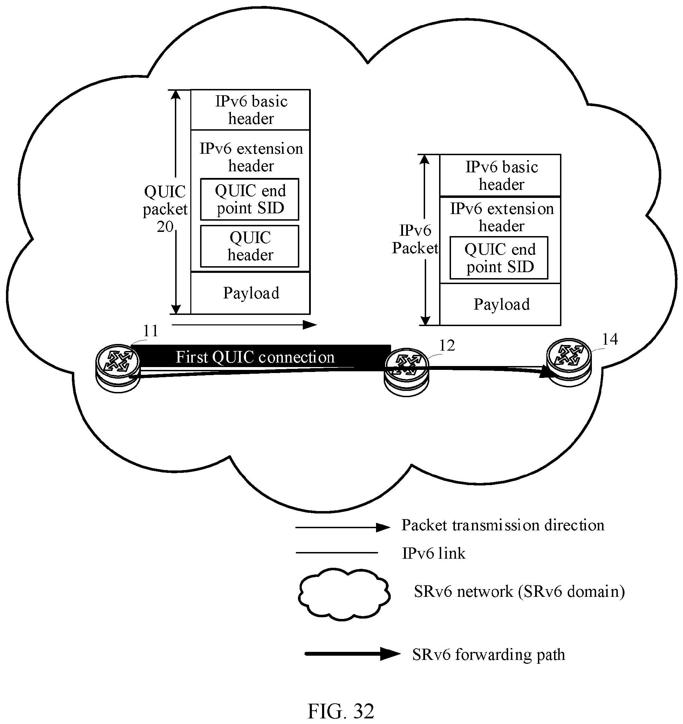

In another example application scenario, as shown in FIG. 32, a tail node of an SR forwarding path and an end point of a QUIC connection are a same device, and are both fourth network devices 14 in FIG. 32. In other words, a segment for QUIC-based transmission is from one SID to the last SID in the SID list. In this scenario, the start point device of the QUIC connection encapsulates a QUIC header into a DOH, to indicate to the end point device of the QUIC connection to transmit a packet based on the QUIC, without encapsulating an end point SID of the QUIC connection. By analogy, the IPv6 extension header may include three, five, or seven QUIC-related SIDs.

The following describes the method shown in FIG. 7 with reference to three examples.

### Example 1

Example 1 is a specific example of how to apply the method shown in FIG. 7 to a scenario in which an endpoint device of a QUIC connection is deployed at an edge of an IPv6 network and transmits a data packet from a user equipment based on a QUIC. Example 1 includes the following step S710 to step S715. Step S712 in example 1 is a specific example of S701 in the method shown in FIG. 7. Step S714 in example 1 is a specific example of S703 in the method shown in FIG. 7. Step S715 in example 1 is a specific example of S704 in the method shown in FIG. 7.

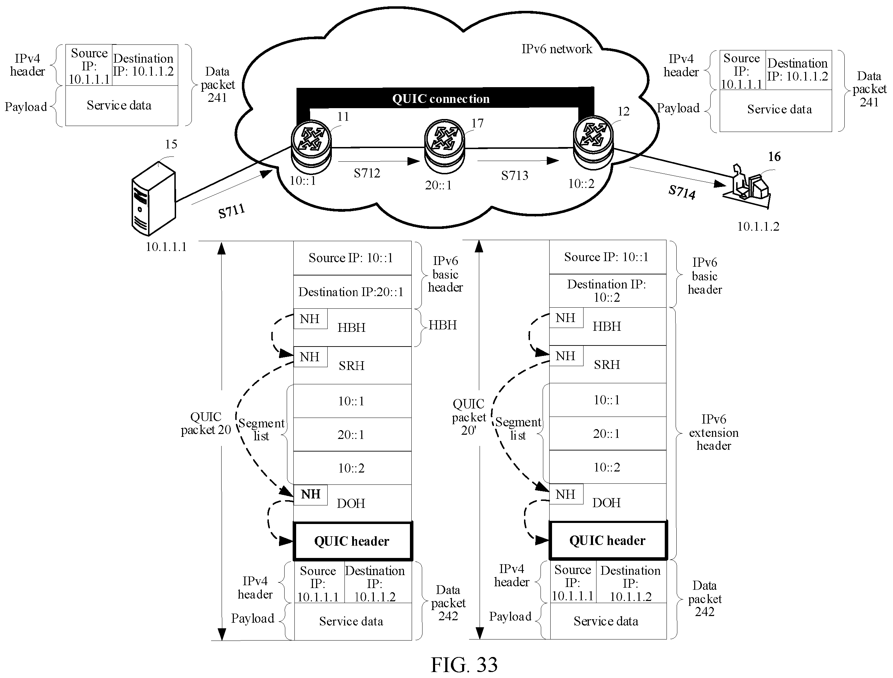

For example, refer to FIG. 33. A scenario on which example 1 is based is shown in FIG. 33. The scenario shown in FIG. 33 includes a first user equipment 15, a second user equipment 16, a first network device 11, a second network device 12, and an intermediate node 17. The first user equipment 15 and the second user equipment 16 are located in an IPv4 network. An IP address of the first user equipment 15 includes an IPv4 address 10.1.1.1, and an IP address of the second user equipment 16 includes an IPv4 address 10.1.1.2. The first network device 11 is an ingress node of an IPv6 network. The second network device 12 is an egress node of the IPv6 network. The intermediate node 17 is located inside the IPv6 network. An IP address of the first network device 11 includes an IPv6 address 10:: 1. An IP address of the second network device 12 includes an IPv6 address 10::2, and an IP address of the intermediate node 17 includes an IPv6 address 20::1.

Step S710: The first network device 11 and the second network device 12 perform a handshake to establish a QUIC connection, and the first network device 11 and the second network device 12 obtain, through negotiation, a key used during data transmission. Step S710 is not shown in FIG. 33.

Step S711: The first user equipment 15 sends a data packet 241 to the first network device 11. The data packet 241 includes an IPv4 header and service data, a source IP address in the IPv4 header is the IPv4 address 10.1.1.1 of the first user equipment 15, and a destination IP address in the IPv4 header is the IPv4 address 10.1.1.2 of the second user equipment 16.

Step S712: The first network device 11 receives the data packet 241, uses the data packet 241 as a payload, encrypts the data packet 241 by using the pre-agreed key, and encapsulates an IPv6 basic header, an HBH, an SRH, a DOH, and a QUIC header into an outer layer of a data packet 242 in a ciphertext form, to obtain a QUIC packet 20, and the first network device 11 sends the QUIC packet 20 through the QUIC connection.

The QUIC packet 20 does not include a UDP header, the QUIC header is a next header of the DOH, and a value of a next header (NH) field in the DOH indicates the QUIC header. Specifically, as shown in FIG. 33, the IPv6 basic header is located at an outermost layer of the QUIC packet 20, a next header of the IPv6 basic header is the HBH, a next header of the HBH is the SRH, a next header of the SRH is the DOH, and a next header of the DOH is the QUIC header. A source IP address in the IPv6 basic header is the IPv6 address 10::1 of the first network device 11, a destination IP address in the IPv6 basic header is the IPv6 address 20::1 of the intermediate node 17, and a SID list in the SRH includes the IPv6 address 20::1 of the intermediate node 17.

Step S713: After receiving the QUIC packet 20, the intermediate node 17 obtains the IPv6 address 10::2 of the second network device 12 from the SID list of the SRH, updates the destination IP address in the IPv6 basic header by using the IPv6 address 10::2 of the second network device 12, to obtain a QUIC packet 20', and sends the QUIC packet 20'.

Step S714: The second network device 12 receives the QUIC packet 20', decapsulates the IPv6 basic header, the HBH, the SRH, the DOH, and the QUIC header, and decrypts the payload by using the key, to obtain a data packet 242 in a plaintext form.

Step S715: The second network device 12 sends the data packet 242 to the second user equipment 16.

### Example 2

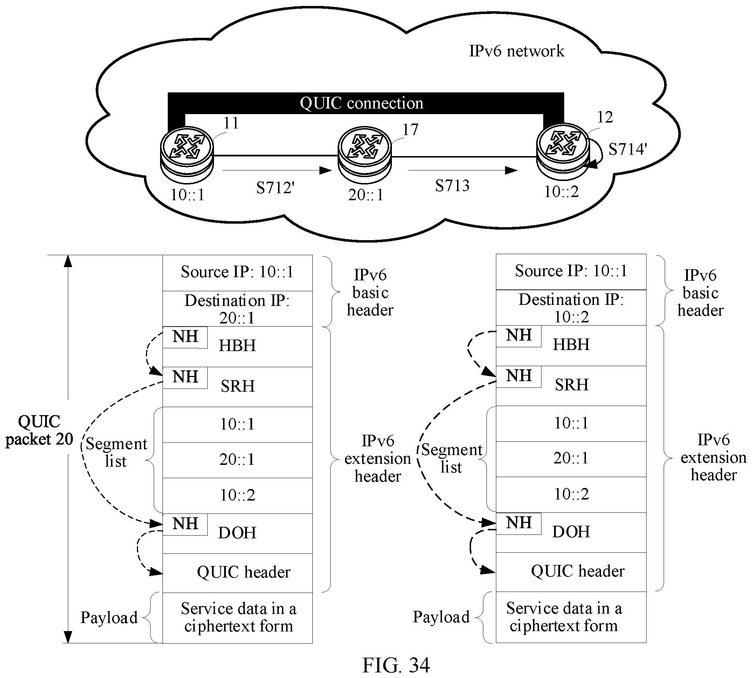

Example 2 is a specific example of how to apply the method shown in FIG. 7 to a scenario in which an endpoint device of a QUIC connection is deployed on an edge of an IPv6 network, and transmits service data of the endpoint device based on the QUIC. A processing procedure of example 2 is shown in FIG. 34. A difference between example 2 and example 1 lies in that a step of interaction between the first network device 11 and the first user equipment 15 and a step of interaction between the second network device 12 and the second user equipment 16 are omitted, step S712 is replaced with the following step S712', and step S714 and step S715 are replaced with the following step S714'. Example 2 also includes step S711 and the foregoing step S713.

Step S712': The first network device 11 uses service data of the first network device 11 as a payload, encrypts the service data of the first network device 11 by using a pre-agreed key, and encapsulates an IPv6 basic header, an HBH, an SRH, a DOH, and a QUIC header into an outer layer of service data in a ciphertext form, to obtain a QUIC packet 20, and the first network device 11 sends the QUIC packet 20 through the QUIC connection.

Step S714': The second network device 12 receives the QUIC packet 20, decapsulates the IPv6 basic header, the HBH, the SRH, the DOH, and the QUIC header, and decrypts the payload by using the key, to obtain the service data in a plaintext form, and the second network device 12 processes a service based on the service data in the plaintext form.

### Example 3

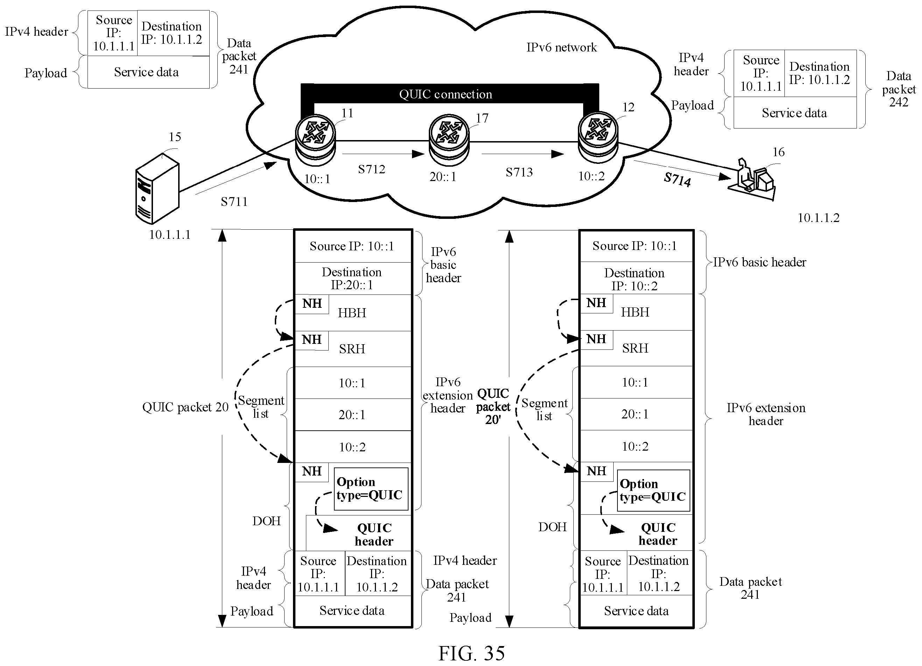

Example 3 includes a processing procedure similar to that in example 1, and a difference between example 3 and example 1 lies in different packet encapsulation formats. Specifically, refer to FIG. 35. In example 1, the QUIC header is encapsulated into the packet as a next header of the IPv6 extension header, and a value of the next header in the IPv6 extension header indicates that there is a QUIC header after the IPv6 extension header, while in example 3, a QUIC header is encapsulated into a packet as an option in an IPv6 extension header, and a value of an option type field indicates that the option includes the QUIC header.

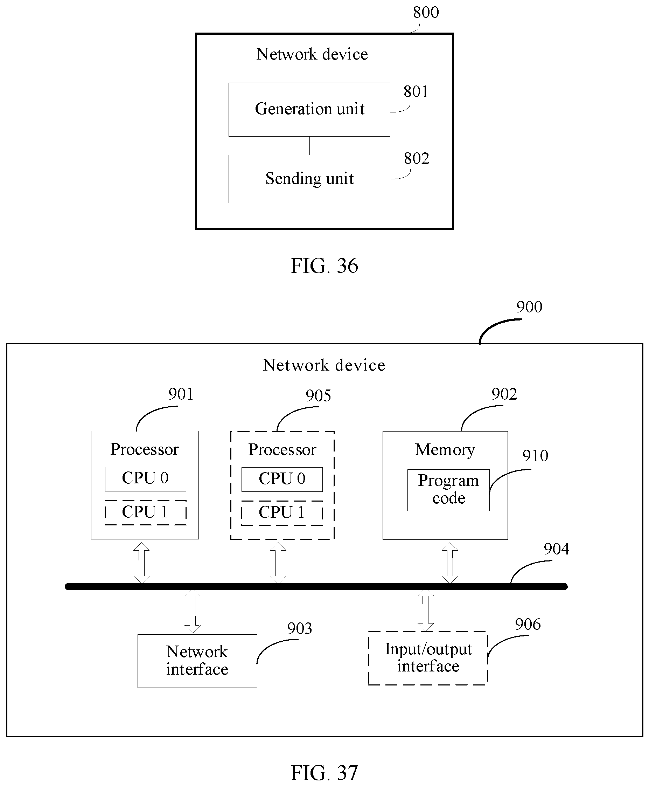

FIG. 36 is a diagram of a structure of a network device 800 according to an embodiment of this application. The network device 800 includes a generation unit 801 and a sending unit 802.

Optionally, with reference to the application scenario shown in FIG. 1, the network device 800 shown in FIG. 36 is the first network device 11 in the application scenario shown in FIG. 1. The generation unit 801 is configured to generate the QUIC packet 20 shown in FIG. 1, and the sending unit 802 is configured to send the QUIC packet 20 to the second network device 12 shown in FIG. 1.

Optionally, with reference to the application scenario shown in FIG. 2, the network device 800 shown in FIG. 36 is the first network device 11 in the application scenario shown in FIG. 2. The generation unit 801 is configured to generate the QUIC packet 20 shown in FIG. 2, and the sending unit 802 is configured to send the QUIC packet 20 to the second network device 12 shown in FIG. 2.

Optionally, with reference to the application scenario shown in FIG. 3, the network device 800 shown in FIG. 36 is the first network device 11 in the application scenario shown in FIG. 3. The generation unit 801 is configured to generate the QUIC packet 20 shown in FIG. 3, and the sending unit 802 is configured to send the QUIC packet 20 to the second network device 12 shown in FIG. 3.

Optionally, with reference to the application scenario shown in FIG. 4, the network device 800 shown in FIG. 36 is the first network device 11 in the application scenario shown in FIG. 4. The generation unit 801 is configured to generate the QUIC packet 20 shown in FIG. 4, and the sending unit 802 is configured to send the QUIC packet 20 to the second network device 12 shown in FIG. 4.

Optionally, with reference to the application scenario shown in FIG. 5, the network device 800 shown in FIG. 36 is the first network device 11 in the application scenario shown in FIG. 5. The generation unit 801 is configured to generate the QUIC packet 20 shown in FIG. 5, and the sending unit 802 is configured to send the QUIC packet 20 to the second network device 12 shown in FIG. 5.

Optionally, with reference to the application scenario shown in FIG. 6, the network device 800 shown in FIG. 36 is the first network device 11 in the application scenario shown in FIG. 6. The generation unit 801 is configured to generate the QUIC packet 20 shown in FIG. 6, and the sending unit 802 is configured to send the QUIC packet 20 to the second network device 12 shown in FIG. 6.

Optionally, with reference to the method procedure shown in FIG. 7, the network device 800 shown in FIG. 36 is the first network device in the method procedure shown in FIG. 7, and the generation unit 801 is configured to perform S701. The sending unit 802 is configured to perform S702.

Optionally, with reference to the packet format shown in FIG. 10, the generation unit 801 shown in FIG. 36 is configured to generate a QUIC packet in the format shown in FIG. 10.

Optionally, with reference to the packet format shown in FIG. 11, the generation unit 801 shown in FIG. 36 is configured to generate a QUIC packet in the format shown in FIG. 11.

Optionally, with reference to the packet format shown in FIG. 12, the generation unit 801 shown in FIG. 36 is configured to generate a QUIC packet in the format shown in FIG. 12.

Optionally, with reference to the packet format shown in FIG. 13, the generation unit 801 shown in FIG. 36 is configured to generate a QUIC packet in the format shown in FIG. 13.

Optionally, with reference to the packet format shown in FIG. 14, the generation unit 801 shown in FIG. 36 is configured to generate a QUIC packet in the format shown in FIG. 14.

Optionally, with reference to the packet format shown in FIG. 15, the generation unit 801 shown in FIG. 36 is configured to generate a QUIC packet in the format shown in FIG. 15.

Optionally, with reference to the packet format shown in FIG. 16, the generation unit 801 shown in FIG. 36 is configured to generate a QUIC packet in the format shown in FIG. 16.

Optionally, with reference to the packet format shown in FIG. 17, the generation unit 801 shown in FIG. 36 is configured to generate a QUIC packet in the format shown in FIG. 17.

Optionally, with reference to FIG. 19, the generation unit 801 shown in FIG. 36 is configured to generate an IPv6 extension header in the format shown in FIG. 19.

Optionally, with reference to FIG. 20, the generation unit 801 shown in FIG. 36 is configured to generate an IPv6 extension header in the format shown in FIG. 20.

Optionally, with reference to FIG. 24, the generation unit 801 shown in FIG. 36 is configured to generate an IPv6 extension header in the format shown in FIG. 24.

Optionally, with reference to FIG. 25, the generation unit 801 shown in FIG. 36 is configured to generate a packet in the format shown in FIG. 25.

Optionally, with reference to the application scenario shown in FIG. 26, the network device 800 shown in FIG. 36 is the first network device 11 in the application scenario shown in FIG. 26. The generation unit 801 is configured to generate the QUIC packet 20 shown in FIG. 6, and the sending unit 802 is configured to send the QUIC packet 20 to the second network device 12 shown in FIG. 26.

Optionally, with reference to FIG. 27, the generation unit 801 shown in FIG. 36 is configured to generate an IPv6 extension header including the format shown in FIG. 27.

Optionally, with reference to the application scenario shown in FIG. 28, the network device 800 shown in FIG. 36 is the first network device 11 in the application scenario shown in FIG. 28. The generation unit 801 is configured to generate the QUIC packet 20 shown in FIG. 28, and the sending unit 802 is configured to send the QUIC packet 20 to the second network device 12 shown in FIG. 28.

Optionally, with reference to FIG. 29, the generation unit 801 shown in FIG. 36 is configured to generate an IPv6 extension header including the format shown in FIG. 29.

Optionally, with reference to FIG. 30, the generation unit 801 shown in FIG. 36 is configured to generate an IPv6 extension header including the format shown in FIG. 30.

Optionally, with reference to the application scenario shown in FIG. 31, the network device 800 shown in FIG. 36 is the first network device 11 in the application scenario shown in FIG. 31. The generation unit 801 is configured to generate the QUIC packet 20 shown in FIG. 31, and the sending unit 802 is configured to send the QUIC packet 20 to the second network device 12 shown in FIG. 31.

Optionally, with reference to the application scenario shown in FIG. 32, the network device 800 shown in FIG. 36 is the first network device 11 in the application scenario shown in FIG. 32. The generation unit 801 is configured to generate the QUIC packet 20 shown in FIG. 32, and the sending unit 802 is configured to send the QUIC packet 20 to the second network device 12 shown in FIG. 32.

Optionally, with reference to the application scenario shown in FIG. 33, the network device 800 shown in FIG. 36 is the first network device 11 in the application scenario shown in FIG. 33. The generation unit 801 is configured to generate, based on the data packet 241 sent by the user equipment 15 in S711, the QUIC packet 20 shown in FIG. 33. The sending unit 802 is configured to perform S712, to send the QUIC packet 20 to the second network device 12 shown in FIG. 33.

Optionally, with reference to the application scenario shown in FIG. 34, the network device 800 shown in FIG. 36 is the first network device 11 in the application scenario shown in FIG. 34. The generation unit 801 is configured to generate the QUIC packet 20 shown in FIG. 34, and the sending unit 802 is configured to perform S712', to send the QUIC packet 20 to the second network device 12 shown in FIG. 34.

Optionally, with reference to the application scenario shown in FIG. 35, the network device 800 shown in FIG. 36 is the first network device 11 in the application scenario shown in FIG. 35. The generation unit 801 is configured to generate the QUIC packet 20 shown in FIG. 35, and the sending unit 802 is configured to perform S712, to send the QUIC packet 20 to the second network device 12 shown in FIG. 35.

The described apparatus embodiment shown in FIG. 36 is merely an example. For example, the unit division is merely logical function division and there may be other division manners in other implementations. For example, a plurality of units or components may be combined or integrated into another system, or some features may be omitted or not performed. Functional units in embodiments of this application may be integrated into one processing unit, each of the units may exist alone physically, or two or more units are integrated into one unit.

All or some units in the network device 800 are implemented through software, hardware, firmware, or any combination thereof.

With reference to the network device 900 described below, the following describes some possible implementations of implementing functional units in the network device 800 by using hardware or software.

When software is used for implementation, for example, the generation unit 801 is implemented by a software functional unit that is generated after at least one processor 901 in FIG. 37 reads program code stored in a memory 902.

When hardware is used for implementation, for example, the units in FIG. 36 are implemented by different hardware in a network device, respectively. For example, the generation unit 801 is implemented by some processing resources (for example, one or two cores in a multi-core processor) in at least one processor 901 in FIG. 37, or implemented by a programmable device such as a field-programmable gate array (field-programmable gate array, FPGA) or a coprocessor. The sending unit 802 is implemented by a network interface 903 in FIG. 37.

FIG. 37 is a diagram of a structure of a network device 900 according to an embodiment of this application. The network device 900 includes at least one processor 901, a memory 902, and at least one network interface 903.

Optionally, with reference to the application scenario shown in FIG. 1, the network device 900 shown in FIG. 37 is the first network device 11 in the application scenario shown in FIG. 1. The processor 901 is configured to generate the QUIC packet 20 shown in FIG. 1, and the network interface 903 is configured to send the QUIC packet 20 to the second network device 12 shown in FIG. 1.

Optionally, with reference to the application scenario shown in FIG. 2, the network device 900 shown in FIG. 37 is the first network device 11 in the application scenario shown in FIG. 2. The processor 901 is configured to generate the QUIC packet 20 shown in FIG. 2, and the network interface 903 is configured to send the QUIC packet 20 to the second network device 12 shown in FIG. 2.

Optionally, with reference to the application scenario shown in FIG. 3, the network device 900 shown in FIG. 37 is the first network device 11 in the application scenario shown in FIG. 3. The processor 901 is configured to generate the QUIC packet 20 shown in FIG. 3, and the network interface 903 is configured to send the QUIC packet 20 to the second network device 12 shown in FIG. 3.

Optionally, with reference to the application scenario shown in FIG. 4, the network device 900 shown in FIG. 37 is the first network device 11 in the application scenario shown in FIG. 4. The processor 901 is configured to generate the QUIC packet 20 shown in FIG. 4, and the network interface 903 is configured to send the QUIC packet 20 to the second network device 12 shown in FIG. 4.

Optionally, with reference to the application scenario shown in FIG. 5, the network device 900 shown in FIG. 37 is the first network device 11 in the application scenario shown in FIG. 5. The processor 901 is configured to generate the QUIC packet 20 shown in FIG. 5, and the network interface 903 is configured to send the QUIC packet 20 to the second network device 12 shown in FIG. 5.

Optionally, with reference to the application scenario shown in FIG. 6, the network device 900 shown in FIG. 37 is the first network device 11 in the application scenario shown in FIG. 6. The processor 901 is configured to generate the QUIC packet 20 shown in FIG. 6, and the network interface 903 is configured to send the QUIC packet 20 to the second network device 12 shown in FIG. 6.

Optionally, with reference to the method procedure shown in FIG. 7, the network device 900 shown in FIG. 37 is the first network device in the method procedure shown in FIG. 7, and the processor 901 is configured to perform S701. The network interface 903 is configured to perform S702.

Optionally, with reference to the packet format shown in FIG. 10, the processor 901 shown in FIG. 37 is configured to generate a QUIC packet in the format shown in FIG. 10.

Optionally, with reference to the packet format shown in FIG. 11, the processor 901 shown in FIG. 37 is configured to generate a QUIC packet in the format shown in FIG. 11.

Optionally, with reference to the packet format shown in FIG. 12, the processor 901 shown in FIG. 37 is configured to generate a QUIC packet in the format shown in FIG. 12.

Optionally, with reference to the packet format shown in FIG. 13, the processor 901 shown in FIG. 37 is configured to generate a QUIC packet in the format shown in FIG. 13.

Optionally, with reference to the packet format shown in FIG. 14, the processor 901 shown in FIG. 37 is configured to generate a QUIC packet in the format shown in FIG. 14.

Optionally, with reference to the packet format shown in FIG. 15, the processor 901 shown in FIG. 37 is configured to generate a QUIC packet in the format shown in FIG. 15.

Optionally, with reference to the packet format shown in FIG. 16, the processor 901 shown in FIG. 37 is configured to generate a QUIC packet in the format shown in FIG. 16.

Optionally, with reference to the packet format shown in FIG. 17, the processor 901 shown in FIG. 37 is configured to generate a QUIC packet in the format shown in FIG. 17.

Optionally, with reference to FIG. 19, the processor 901 shown in FIG. 37 is configured to generate an IPv6 extension header in the format shown in FIG. 19.

Optionally, with reference to FIG. 20, the processor 901 shown in FIG. 37 is configured to generate an IPv6 extension header in the format shown in FIG. 20.

Optionally, with reference to FIG. 24, the processor 901 shown in FIG. 37 is configured to generate an IPv6 extension header in the format shown in FIG. 24.

Optionally, with reference to FIG. 25, the processor 901 shown in FIG. 37 is configured to generate a packet in the format shown in FIG. 25.

Optionally, with reference to the application scenario shown in FIG. 26, the network device 900 shown in FIG. 37 is the first network device 11 in the application scenario shown in FIG. 26. The processor 901 is configured to generate the QUIC packet 20 shown in FIG. 6, and the network interface 903 is configured to send the QUIC packet 20 to the second network device 12 shown in FIG. 26.

Optionally, with reference to FIG. 27, the processor 901 shown in FIG. 37 is configured to generate an IPv6 extension header including the format shown in FIG. 27.

Optionally, with reference to the application scenario shown in FIG. 28, the network device 900 shown in FIG. 37 is the first network device 11 in the application scenario shown in FIG. 28. The processor 901 is configured to generate the QUIC packet 20 shown in FIG. 28, and the network interface 903 is configured to send the QUIC packet 20 to the second network device 12 shown in FIG. 28.

Optionally, with reference to FIG. 29, the processor 901 shown in FIG. 37 is configured to generate an IPv6 extension header including the format shown in FIG. 29.

Optionally, with reference to FIG. 30, the processor 901 shown in FIG. 37 is configured to generate an IPv6 extension header including the format shown in FIG. 30.

Optionally, with reference to the application scenario shown in FIG. 31, the network device 900 shown in FIG. 37 is the first network device 11 in the application scenario shown in FIG. 31. The processor 901 is configured to generate the QUIC packet 20 shown in FIG. 31, and the network interface 903 is configured to send the QUIC packet 20 to the second network device 12 shown in FIG. 31.

Optionally, with reference to the application scenario shown in FIG. 32, the network device 900 shown in FIG. 37 is the first network device 11 in the application scenario shown in FIG. 32. The processor 901 is configured to generate the QUIC packet 20 shown in FIG. 32, and the network interface 903 is configured to send the QUIC packet 20 to the second network device 12 shown in FIG. 32.

Optionally, with reference to the application scenario shown in FIG. 33, the network device 900 shown in FIG. 37 is the first network device 11 in the application scenario shown in FIG. 33. The processor 901 is configured to generate, based on the data packet 241 sent by the user equipment 15 in S711, the QUIC packet 20 shown in FIG. 33. The network interface 903 is configured to perform S712, to send the QUIC packet 20 to the second network device 12 shown in FIG. 33.

Optionally, with reference to the application scenario shown in FIG. 34, the network device 900 shown in FIG. 37 is the first network device 11 in the application scenario shown in FIG. 34. The processor 901 is configured to generate the QUIC packet 20 shown in FIG. 34, and the network interface 903 is configured to perform S712', to send the QUIC packet 20 to the second network device 12 shown in FIG. 34.

Optionally, with reference to the application scenario shown in FIG. 35, the network device 900 shown in FIG. 37 is the first network device 11 in the application scenario shown in FIG. 35. The processor 901 is configured to generate the QUIC packet 20 shown in FIG. 35, and the network interface 903 is configured to perform S712, to send the QUIC packet 20 to the second network device 12 shown in FIG. 35.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits for implementing the solution of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable logic gate array (field-programmable gate array, FPGA), a generic array logic (generic array logic, GAL), or any combination thereof.

The memory 902 is, for example, a read-only memory (read-only memory, ROM) or another type of static storage device capable of storing static information and instructions, or a random access memory (random access memory, RAM) or another type of dynamic storage device capable of storing information and instructions, or is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or a data structure and capable of being accessed by a computer. However, the memory 902 is not limited thereto. Optionally, the memory 902 exists independently and is connected to the processor 901 by an internal connection 904. Alternatively, the memory 902 is optionally integrated with the processor 901.

The network interface 903 uses any apparatus such as a transceiver, and is configured to communicate with another device or a communication network. The network interface 903 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, such as a CPU 0 and a CPU 1 shown in FIG. 37.

In some embodiments, the network device 900 optionally includes a plurality of processors, such as the processor 901 and a processor 905 shown in FIG. 37. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the network device 900 further includes the internal connection 904. The processor 901, the memory 902, and the at least one network interface 903 are connected by the internal connection 904. The internal connection 904 includes a pathway, for transferring information between the foregoing components. Optionally, the internal connection 904 is a board or bus. Optionally, the internal connection 904 includes an address bus, a data bus, a control bus, and the like.

In some embodiments, the network device 900 further includes an input/output interface 906. The input/output interface 906 is connected to the internal connection 904.

Optionally, the processor 901 implements the method in the foregoing embodiment by reading program code stored in the memory 902, or the processor 901 implements the method in the foregoing embodiment by using internally stored program code. When the processor 901 implements the method in the foregoing embodiment by reading the program code stored in the memory 902, the memory 902 stores program code 910 that implements the method provided in embodiments of this application.

For more details about the processor 901 implementing the foregoing functions, refer to descriptions in the foregoing method embodiments. Details are not described herein again.

Embodiments in this specification are described in a progressive manner. For same or similar parts in embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not intended to describe a particular order of the objects, and cannot be understood as an indication or implication of relative importance. For example, the first SID and the second SID are used for distinguishing between different SIDs, but are not used for describing a particular order of the SIDs, and it cannot be understood that the first SID is more important than the second SID.

In embodiments of this application, unless otherwise specified, "at least one" means one or more, and "a plurality of" means two or more. For example, a plurality of IPv6 extension headers refers to two or more IPv6 extension headers.

All or some of the foregoing embodiments may be implemented through software, hardware, firmware, or any combination thereof. When software is used to implement the embodiments, all or a part of the embodiments may be implemented in the form of a computer program product. The computer program product includes one or more computer instructions. When the computer program instructions are loaded and executed on a computer, all or some of the described procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive (SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A quick user datagram protocol internet connection QUIC packet transmission method, comprising:
generating, by a first network device, a QUIC packet, wherein the QUIC packet comprises an internet protocol version 6 IPv6 extension header and a QUIC header, and the QUIC header is a next header of the IPv6 extension header or the QUIC header is located inside the IPv6 extension header; and
sending, by the first network device, the QUIC packet.

2. The method according to claim 1, wherein the QUIC header is a next header of the IPv6 extension header, and a value of a next header field in the IPv6 extension header indicates the QUIC header.

3. The method according to claim 2, wherein the IPv6 extension header comprises a destination options header (DOH), a segment routing header (SRH), or a hop-by-hop options header (HBH).

4. The method according to claim 1, wherein the IPv6 extension header comprises an option field, the option field comprises an option type field and an option data field, a value of the option type field indicates the QUIC header, and the option data field comprises the QUIC header.

5. The method according to claim 4, wherein the IPv6 extension header comprises a DOH, an SRH, or an HBH.

6. The method according to any one of claims 1 to 5, wherein the IPv6 extension header comprises a first segment identifier SID and a second SID, the first SID identifies a start point device of a first QUIC connection, the second SID identifies an end point device of the first QUIC connection, and the first QUIC connection is used for transmitting the QUIC packet.

7. The method according to claim 6, wherein a value of a function field in the first SID indicates to send the QUIC packet through the first QUIC connection, a value of an arguments field in the first SID indicates to add the QUIC header, a value of a function field in the second SID indicates to receive the QUIC packet through the first QUIC connection, and a value of an arguments field in the second SID indicates to remove the QUIC header.

8. The method according to claim 6, wherein a value of a function field in the first SID indicates to send the QUIC packet through the first QUIC connection and add the QUIC header, and a value of a function field in the second SID indicates to receive the QUIC packet through the first QUIC connection and remove the QUIC header.

9. The method according to any one of claims 6 to 8, wherein
the IPv6 extension header comprises a DOH, an SRH, or an HBH, the IPv6 extension header comprises an option field, the option field comprises an option data field, and the option data field comprises the QUIC header, the first SID, and the second SID; or
the IPv6 extension header comprises an SRH, a SID list in the SRH comprises the first SID and the second SID, and an option field in the SRH comprises the QUIC header or a next header of the SRH is the QUIC header.

10. The method according to any one of claims 1 to 5, wherein the IPv6 extension header comprises a first SID, the first SID identifies an endpoint device of a first QUIC connection, the first network device is an endpoint device other than the endpoint device in the first QUIC connection, and the first QUIC connection is used for transmitting the QUIC packet.

11. The method according to any one of claims 6 to 10, wherein the IPv6 extension header further comprises a third SID and a fourth SID, the third SID identifies a start point device of a second QUIC connection, the fourth SID identifies an end point device of the second QUIC connection, and the second QUIC connection is a QUIC connection after the first QUIC connection in a forwarding path of the QUIC packet.

12. The method according to any one of claims 1 to 11, wherein the generating, by a first network device, a QUIC packet comprises:
receiving, by the first network device, an IPv6 packet, wherein the IPv6 packet comprises the IPv6 extension header; and
adding, by the first network device, the QUIC header to the IPv6 packet to obtain the QUIC packet; and
correspondingly, the sending, by the first network device, the QUIC packet comprises:
sending, by the first network device, the QUIC packet through the first QUIC connection.

13. The method according to any one of claims 1 to 11, wherein the generating, by a first network device, a QUIC packet comprises:
receiving, by the first network device, a data packet from a user equipment; and
adding, by the first network device, the IPv6 extension header and the QUIC header to the data packet to obtain the QUIC packet, wherein a payload field of the QUIC packet comprises the data packet.

14. The method according to any one of claims 1 to 11, wherein the generating, by a first network device, a QUIC packet comprises:
generating, by the first network device, the QUIC packet based on service data generated by the first network device, wherein a payload field of the QUIC packet comprises the service data.

15. The method according to any one of claims 1 to 14, wherein the QUIC packet does not comprise a user datagram protocol UDP header.

16. A network device, comprising:
a generation unit, configured to generate a quick user datagram protocol internet connection QUIC packet, wherein the QUIC packet comprises an internet protocol version 6 IPv6 extension header and a QUIC header, and the QUIC header is a next header of the IPv6 extension header or the QUIC header is located inside the IPv6 extension header; and
a sending unit, configured to send the QUIC packet.

17. The device according to claim 16, wherein the QUIC header is a next header of the IPv6 extension header, and a value of a next header field in the IPv6 extension header indicates the QUIC header.

18. The device according to claim 17, wherein the IPv6 extension header comprises a destination options header (DOH), a segment routing header (SRH), or a hop-by-hop options header (HBH).

19. The device according to claim 16, wherein the IPv6 extension header comprises an option field, the option field comprises an option type field and an option data field, a value of the option type field indicates the QUIC header, and the option data field comprises the QUIC header.

20. The device according to claim 19, wherein the IPv6 extension header comprises a DOH, an SRH, or an HBH.

21. The device according to any one of claims 16 to 20, wherein the IPv6 extension header comprises a first segment identifier SID and a second SID, the first SID identifies a start point device of a first QUIC connection, the second SID identifies an end point device of the first QUIC connection, and the first QUIC connection is used for transmitting the QUIC packet.

22. The device according to claim 21, wherein a value of a function field in the first SID indicates to send the QUIC packet through the first QUIC connection, a value of an arguments field in the first SID indicates to add the QUIC header, a value of a function field in the second SID indicates to receive the QUIC packet through the first QUIC connection, and a value of an arguments field in the second SID indicates to remove the QUIC header; or a value of a function field in the first SID indicates to send the QUIC packet through the first QUIC connection and add the QUIC header, and a value of a function field in the second SID indicates to receive the QUIC packet through the first QUIC connection and remove the QUIC header.

23. The device according to any one of claims 16 to 22, wherein the generation unit is configured to: receive an IPv6 packet, wherein the IPv6 packet comprises the IPv6 extension header; and add the QUIC header to the IPv6 packet to obtain the QUIC packet; and the sending unit is configured to send the QUIC packet through the first QUIC connection.

24. The device according to any one of claims 16 to 22, wherein the generation unit is configured to: receive a data packet from a user equipment; and add the IPv6 extension header and the QUIC header to the data packet to obtain the QUIC packet, wherein a payload field of the QUIC packet comprises the data packet.

25. The device according to any one of claims 16 to 22, wherein the generation unit is configured to generate service data, and generate the QUIC packet based on the service data, wherein a payload field of the QUIC packet comprises the service data.

26. The device according to any one of claims 16 to 22, wherein the QUIC packet does not comprise a user datagram protocol UDP header.

27. A network device, wherein the network device comprises a processor and a network interface, the processor is configured to execute instructions, to enable the network device to perform the method according to any one of claims 1 to 15, and the network interface is configured to send a QUIC packet.

28. A computer-readable storage medium, wherein the storage medium stores at least one instruction, and when the instruction is run on a computer, the computer is enabled to perform the method according to any one of claims 1 to 15.

29. A computer program product, wherein the computer program product comprises one or more computer program instructions, and when the computer program instructions are loaded and run by a computer, the computer is enabled to perform the method according to any one of claims 1 to 15.
